# EUROPEAN PATENT SPECIFICATION

(11) **EP 4 249 774 B1**
(45) Date of publication and mention of the grant of the patent: **02.04.2025**
(21) Application number: 20962950.0
(22) Date of filing: 27.11.2020
(51) Int. Cl.: F16H 57/04

(54) **TRANSMISSION, VEHICLE POWER ASSEMBLY, AND VEHICLE**
GETRIEBE, FAHRZEUGANTRIEBSANORDNUNG UND FAHRZEUG
TRANSMISSION, ENSEMBLE DE PUISSANCE DE VÉHICULE ET VÉHICULE

(43) Date of publication of application: 27.09.2023
(73) Proprietor: Huawei Digital Power Technologies Co., Ltd., Shenzhen, Guangdong 518043 (CN)
(72) Inventor: YANG, Shaobo, Shenzhen, Guangdong 518129 (CN); LI, Chuanyang, Shenzhen, Guangdong 518129 (CN); XIA, Gongchuan, Shenzhen, Guangdong 518129 (CN); ZHONG, Hu, Shenzhen, Guangdong 518129 (CN); ZHU, Lingkun, Shenzhen, Guangdong 518129 (CN); LI, Quanming, Shenzhen, Guangdong 518129 (CN)
(74) Representative: Maiwald GmbH
(86) International application number: PCT/CN2020/132435
(87) International publication number: WO 2022/110060

(56) References cited:
- EP-A1- 3 660 354
- EP-A1- 3 686 463
- CN-A- 107 314 100
- CN-A- 109 058 435
- CN-A- 110 259 923
- CN-A- 110 259 923
- CN-A- 111 442 082
- CN-A- 111 550 548
- CN-U- 209 856 357
- DE-B- 1 047 820

## Description

### TECHNICAL FIELD

This application relates to the field of electric vehicles, and in particular, to a transmission, a vehicle powertrain in which the transmission is configured, and a vehicle.

### BACKGROUND

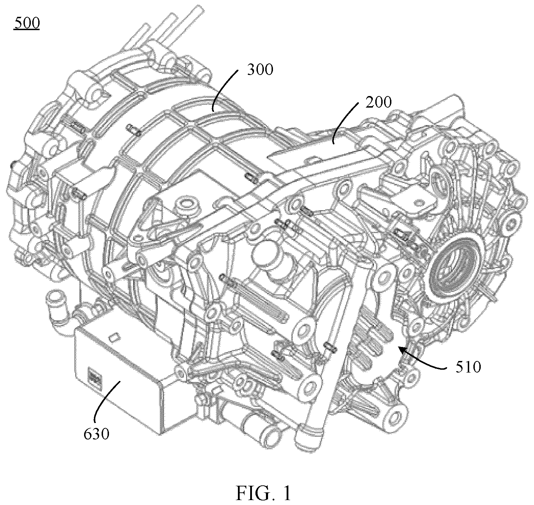

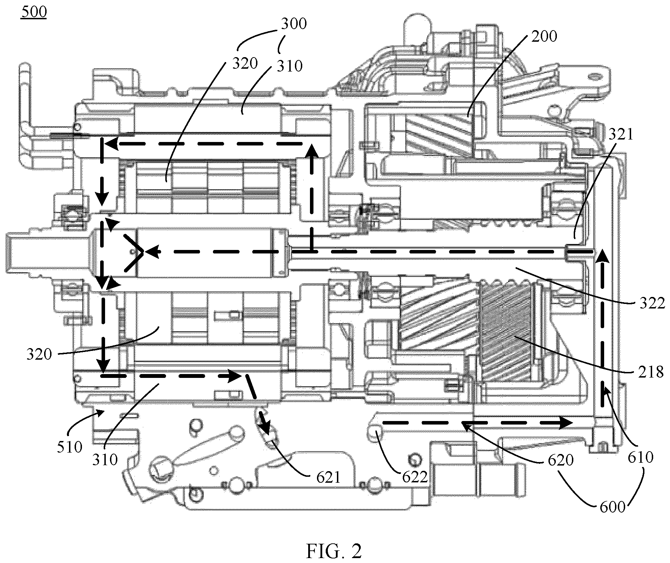

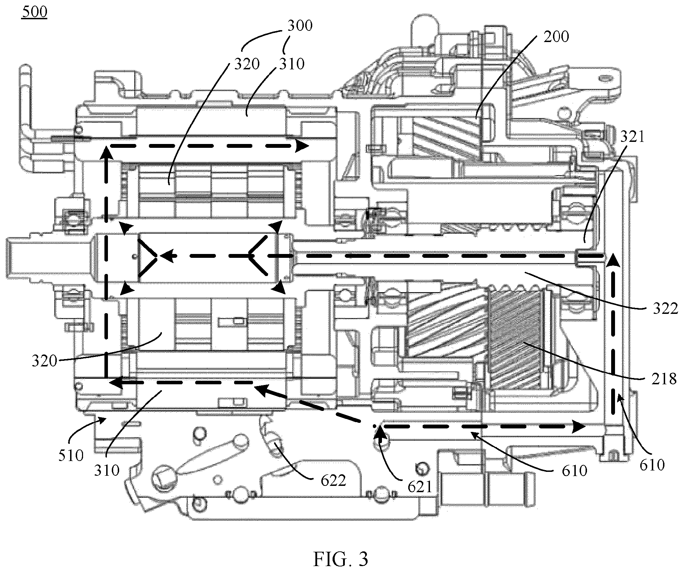

A vehicle powertrain of an electric vehicle includes a motor and a transmission. As a power source, the motor has a relatively high rotational speed, and a transmission with a specific reduction ratio needs to be matched to transmit power of the motor to a wheel end. When the vehicle powertrain works, the motor generates a large amount of heat, and in addition, a bearing and a gear in the transmission have high rotational speeds and large load, and a great amount of heat is generated because of friction of surfaces of the bearing and the gear. To prevent a transmission failure, a cooling and lubrication design is introduced into the motor and the transmission during engineering design, to ensure that parts fall within a proper working temperature range. The CN110259923 A refers to a transmission (20, Fig. 1 and 2), comprising a box body with an inner cavity and a gear set (22 and around 21) and an oil supply device (10, comprising three chambers: left, central and right) that are accommodated in the box body, wherein an oil sump (101) carrying lubricating oil is disposed at the bottom of the inner cavity;the oil supply device (10) is fastened on a side (Fig. 3) that is of the gear set and that is away from the oil sump, the oil supply device comprises a sealing chamber (12, central chamber of 10) and an oil collection tank (11, left chamber of 10) that are fastened to each other, and the oil collection tank is located above the sealing chamber; - an oil inlet (upper opening of 12) and at least one oil pipe (12c) are disposed for the sealing chamber, and the at least one oil pipe extends in different directions; and the sealing chamber is configured to: receive the lubricating oil that is in the oil sump and that is transported from the oil inlet, and send (via a pump 15) the lubricating oil to at least one to-be-lubricated part (gear 22, shaft K or bearing 21) of the gear set through the at least one oil pipe; and the oil collection tank has an upper opening, the oil collection tank is configured to: when the gear set rotates, receive, by using the upper opening, the lubricating oil (1, Fig. 2) that is in the oil sump and that is stirred and transported by the gear set, at least one oil transport tank (11, right chamber of 10) is further disposed (right chamber 11 is further disposed than left chamber 10, in the direction of arrow 1) for the oil collection tank, a quantity (one) of oil transport tanks is the same as a quantity of oil spray (12c), and any oil transport tank is disposed corresponding to one oil pipe, and is configured to lubricate a same to-be-lubricated part together with the corresponding oil pipe. The EP3686463 A1 refers to a vehicle drive-force transmitting apparatus.

Currently, driven by a market, vehicle powertrains are evolving toward miniaturization and high power. A maximum rotational speed and maximum load of the vehicle powertrain constantly increase to achieve higher power density and total power. With the increase of the rotational speed and the load, heat generated by the motor and the transmission significantly increases, and ensuring efficient cooling and lubrication of the motor and the transmission becomes a bottleneck restricting miniaturization of the powertrain.

### SUMMARY

This application is intended to provide a reliably lubricated transmission, to adapt to working statuses of the transmission at different rotational speeds. This application further provides a vehicle powertrain including the transmission and a vehicle. Both the vehicle powertrain and the vehicle are configured based on characteristics of the transmission, to obtain better lubrication and cooling effects. The invention is set out in the appended set of claims.

According to a first aspect, this application relates to a transmission, including a box body with an internal cavity and a gear set and an oil supply device that are accommodated in the box body. An oil sump carrying lubricating oil is disposed at the bottom of the inner cavity. The oil supply device is fastened on a side that is of the gear set and that is away from the oil sump, the oil supply device includes a sealing chamber and an oil collection tank that are fastened to each other, and the oil collection tank is located above the sealing chamber. An oil inlet port and at least one oil spray pipe are disposed for the sealing chamber, and the at least one oil spray pipe extends in different directions; and the sealing chamber is configured to: receive the lubricating oil that is in the oil sump and that is transported from the oil inlet port, and spray the lubricating oil to at least one to-be-lubricated part of the gear set through the at least one oil spray pipe. The oil collection tank has an upper opening, the oil collection tank is configured to: when the gear set rotates, receive, by using the upper opening, the lubricating oil that is in the oil sump and that is stirred and transported by the gear set, at least one oil transport tank is further disposed for the oil collection tank, a quantity of oil transport tanks is the same as a quantity of oil spray pipes, and any oil transport tank is disposed corresponding to one oil spray pipe, and is configured to lubricate a same to-be-lubricated part together with the corresponding oil spray pipe.

In the transmission in this application, the gear set and the oil supply device are accommodated in the inner cavity of the box body, and the oil sump is formed in the inner cavity of the box body, to implement rotation and deceleration functions of the transmission. In addition, the lubricating oil in the oil sump is transported to the oil supply device to lubricate a preset to-be-lubricated part of the gear set. Because the oil supply device is fastened on the side that is of the gear set and that is away from the oil sump, in other words, the oil supply device is vertically fastened above the gear set, the lubricating oil transported by the oil supply device from the oil transport tank and/or the oil spray pipe can flow to the to-be-lubricated part of the gear set under an action of gravity.

Because of the oil inlet port, the oil supply device allows the lubricating oil to flow to the sealing chamber, and the lubricating oil in the sealing chamber can flow out through the oil spray pipe to act on the to-be-lubricated part of the gear set. The sealing chamber can provide specific pressure to the lubricating oil to ensure that the oil spray pipe sprays the lubricating oil to the to-be-lubricated part at a specific speed, to implement active lubrication on the to-be-lubricated part.

When the gear set rotates, the oil supply device further collects, by using the upper opening of the oil collection tank located above the sealing chamber, the lubricating oil stirred and transported by the gear set, and the lubricating oil flows out from the oil transport tank to act on the to-be-lubricated part of the gear set, to implement passive lubrication on the to-be-lubricated part.

For a same to-be-lubricated part of the gear set, an extension path of the oil spray pipe extending from the sealing chamber corresponds to that of the oil transport tank extending from the oil collection tank, so that both the oil spray pipe and the oil transport tank can extend toward the to-be-lubricated part, to respectively implement active lubrication and passive lubrication on the to-be-lubricated part.

While the oil supply device in this application implements active lubrication and passive lubrication on each to-be-lubricated part of the gear set, the oil supply device can also correspondingly adjust, for different positions of to-be-lubricated parts through matching between the oil transport tank and the oil spray pipe, extension paths of the oil transport tank and the oil spray pipe respectively relative to the oil collection tank and the sealing chamber, to match the position of the to-be-lubricated part, thereby achieving a lubrication effect. The positions of the to-be-lubricated parts of the gear set and a quantity of to-be-lubricated parts may be randomly adjusted based on a requirement of an actual engineering structure, without affecting a lubrication effect of the oil supply device, so that normal working of the gear set is ensured, and reliability of the transmission is improved.

In a possible embodiment, the gear set includes a first gear and a second gear that are engaged with each other, and the first gear and the second gear are separately rotatably connected to the box body. The bottom of the first gear is located in the oil sump and immersed in the lubricating oil, a side that is of the first gear and that is away from the second gear rotates from bottom to top, the first gear is spaced from an inner wall of the box body to form an oil stirring channel, and when the first gear rotates, the lubricating oil in the oil sump can be driven to enter the oil collection tank through the oil stirring channel.

In this embodiment, the first gear is immersed in the lubricating oil carried in the oil sump, and when the first gear rotates, the lubricating oil can be transported to the oil collection tank of the oil supply device through the oil stirring channel formed by the first gear and the inner wall, to implement a passive lubrication function on each to-be-lubricated part of the gear set.

In a possible embodiment, the oil supply device is disposed on a side that is of the first gear and that is close to the second gear, the inner wall of the box body includes a first side wall and a top wall, the first side wall is located on the side that is of the first gear and that is away from the second gear, the top wall is located above the first side wall, and the first side wall and the top wall form the oil stirring channel together with the first gear.

In this embodiment, the side that is of the first gear and that is away from the second gear rotates from bottom to top, and the side that is of the first gear and that is close to the second gear rotates from top to bottom. When the oil supply device is disposed on the side that is of the first gear and that is close to the second gear, the lubricating oil stirred by the first gear needs to pass over the top of the first gear and then be transported to the oil collection tank. In this case, the first side wall and the top wall form the oil stirring channel together with the first gear, so that the lubricating oil stirred by the first gear passes through the oil stirring channel, and is transported to the oil collection tank.

The top wall includes a first end face close to the first side wall and a second end face opposite to the first end face, and the second end face is vertically located below the first end face, to guide the lubricating oil in the oil stirring channel to flow to the oil collection tank.

In this embodiment, a side that is of the top wall and that is close to the first side wall needs to be spaced from the top of the first gear, and a side that is of the top wall and that is away from the first side wall may be vertically located below the first end face, so that a tilted surface tilted from the first gear toward the oil collection tank is formed, to guide more lubricating oil to fall into the oil collection tank.

In a possible embodiment, a distance between a liquid level of the lubricating oil in the oil sump and a rotation center of the first gear is less than or equal to a radius of a dedendum circle of the first gear.

In this embodiment, the liquid level of the lubricating oil in the oil sump is defined, to ensure a depth of the first gear immersed in the lubricating oil, thereby ensuring that the first gear can stir a sufficient amount of oil into the oil collection tank.

According to the invention, the transmission further includes an oil transport component, the oil transport component includes an oil transport pipeline and an oil transport pump, one end of the oil transport pipeline is connected to the oil inlet port of the oil supply device, the other end of the oil transport pipeline is connected to the oil sump, and the oil transport pump is configured to pump the lubricating oil in the oil sump into the sealing chamber through the oil transport pipeline.

The lubricating oil in the oil sump is transported to the sealing chamber through a connection between the oil transport component and the sealing chamber, to implement an active lubrication function on each to-be-lubricated part of the gear set.

In a possible embodiment, the first gear and the second gear are engaged with each other at a first engagement part, and the at least one to-be-lubricated part includes the first engagement part.

In this embodiment, the first gear and the second gear are engaged with each other at the first engagement part, and the first engagement part is lubricated to reduce friction between surfaces of the first gear and the second gear and prolong a service life of the gear set.

In a possible embodiment, the transmission further includes a third gear and a fourth gear, the third gear and the fourth gear are engaged with each other at a second engagement part, and the at least one to-be-lubricated part further includes the second engagement part.

In this embodiment, the gear set may further include more gears, and the more gears are engaged with each other for transmission. In this case, the oil supply device may further lubricate other engagement parts to reduce a friction loss of the gear set.

In a possible embodiment, the gear set further includes a first gear shaft, a second gear shaft, a first bearing, and a second bearing, the first gear shaft is fastened to the first gear, the second gear shaft is fastened to the second gear, the first bearing is configured to implement a rotatable connection between the first gear shaft and the box body, the second bearing is configured to implement a rotatable connection between the second gear shaft and the box body, and the to-be-lubricated part further includes a position of the first bearing and a position of the second bearing.

In this embodiment, a rotatable connection of the first gear relative to the box body may be implemented through cooperation of the first gear shaft and the first bearing. The first bearing is lubricated to reduce internal friction of the first bearing and prolong a service life of the first bearing. A rotatable connection of the second gear relative to the box body may be implemented through cooperation of the second gear shaft and the second bearing. The second bearing is also lubricated to reduce internal friction of the second bearing and prolong a service life of the second bearing.

In a possible embodiment, the gear set further includes a third gear shaft and a third bearing, the third gear shaft is fastened to the third gear, and is configured to implement a rotatable connection between the third gear shaft and the box body, and the to-be-lubricated part further includes a position of the third bearing.

In this embodiment, the gear set may further include the third bearing, and the oil supply device may further lubricate the third bearing to reduce internal friction of the third bearing and prolong a service life of the third bearing.

In a possible embodiment, the at least one oil spray pipe includes a lateral oil spray pipe, and the lateral oil spray pipe horizontally extends away from the sealing chamber. The at least one oil transport tank includes a lateral oil transport tank, a gap connected to the lateral oil transport tank is disposed on a side plate, and the lateral oil transport tank extends in a same direction as a corresponding lateral oil spray pipe, and is located above the corresponding lateral oil spray pipe.

In this embodiment, corresponding to some to-be-lubricated parts of the gear set that are located in a lateral direction of the oil supply device, the lateral oil spray pipe connected to the sealing chamber and the lateral oil transport tank connected to the oil collection tank by using the gap are disposed, the lateral oil transport tank is located above the lateral oil spray pipe, and the lateral oil transport tank and the lateral oil spray pipe may extend to the to-be-lubricated part of the gear set in parallel, to respectively achieve active lubrication and passive lubrication effects on the to-be-lubricated part.

In a possible embodiment, the lateral oil transport tank includes a tank bottom and two tank walls, the tank bottom is parallel to the lateral oil spray pipe, the two tank walls are disposed opposite to each other on both sides of the tank bottom, the tank bottom includes a first end close to the gap and a second end away from the gap, and the second end is vertically located below the first end or flush with the first end.

In this embodiment, the lubricating oil is guided to flow to the to-be-lubricated part by using the tank bottom and the tank wall of the lateral oil transport tank, to achieve a passive lubrication effect on the to-be-lubricated part. In addition, the second end is flush with or lower than the first end, to ensure that the lubricating oil smoothly flows to the to-be-lubricated part under an action of gravity.

In a possible embodiment, on a path on which the lateral oil spray pipe and the lateral oil transport tank extend in parallel, the lateral oil spray pipe has an extension section beyond an extension length of the lateral oil transport tank, an open opening is disposed on the top of the extension section, and the lubricating oil transported by the lateral oil transport tank further flows to the extension section through the opening, and acts on the to-be-lubricated part along the extension section.

In this embodiment, a part of the lateral oil spray pipe extends beyond the lateral oil transport tank along the extension path, the lubricating oil in the lateral oil transport tank is received by using the open opening on the top of the extra extension section, and the part of lubricating oil acts on the position of the to-be-lubricated part along the extension section. In this embodiment, a structure of the lateral oil transport tank is simplified by disposing the lateral oil transport tank and the lateral oil spray pipe in parallel, and the lubricating oil can be guided only by using the lateral oil spray pipe.

In a possible embodiment, a plurality of first ends are horizontally flush with each other.

In this embodiment, after the oil collection tank is connected to a plurality of lateral oil transport tanks, first ends at tank bottoms of the plurality of lateral oil transport tanks are horizontally flush with each other, to ensure that the lubricating oil in the oil collection tank evenly flows to the lateral oil transport tanks, thereby ensuring a lubrication effect of the lateral oil transport tanks on the to-be-lubricated parts.

In a possible embodiment, the at least one oil spray pipe includes a vertical oil spray pipe, and the vertical oil spray pipe vertically extends away from the sealing chamber. The at least one oil transport tank includes a vertical oil transport tank, the vertical oil transport tank is fastened to a bottom plate of the oil collection tank, and is constructed as a through-tank penetrating through the sealing chamber, and the vertical oil transport tank extends in a same direction as a corresponding vertical oil spray pipe, and is located on a side of the corresponding vertical oil spray pipe.

In this embodiment, corresponding to some to-be-lubricated parts of the gear set that may be located below the oil supply device, the vertical oil spray pipe connected to the sealing chamber and the vertical oil transport tank connected to the oil collection tank are disposed, and the lateral oil transport tank is constructed as the through-tank penetrating through the sealing chamber, to achieve a lubrication effect on the to-be-lubricated part below the oil supply device. In this case, the vertical oil transport tank is located on the side of the vertical oil spray pipe, and the vertical oil transport tank and the vertical oil spray pipe extend toward the to-be-lubricated part below the vertical oil transport tank and the vertical oil spray pipe in parallel.

In a possible embodiment, the vertical oil spray pipe is constructed as an opening disposed at the bottom of the sealing chamber.

In this embodiment, because the to-be-lubricated part is located below the oil supply device, the vertical oil spray pipe is constructed as the opening disposed at the bottom of the sealing chamber, so that at the opening, the sealing chamber can directly transport the lubricating oil to the to-be-lubricated part under an action of gravity.

In a possible embodiment, a quantity of the at least one oil transport tank is more than one, at least one oil guide plate is further disposed on the bottom plate, the at least one oil guide plate divides internal space of the oil collection tank into at least two oil collection regions, a quantity of oil collection regions is the same as the quantity of oil transport tanks, and each oil transport tank is connected to one oil collection region.

In this embodiment, the oil guide plate is used to divide the internal space of the oil collection tank into a plurality of oil collection regions, and each oil transport tank is connected to one oil collection region, to ensure that required lubricating oil is allocated to each oil transport tank and the oil transport tank is lubricated. Different sizes of the oil collection regions are set, to further provide lubrication with different amounts of oil to different to-be-lubricated parts, thereby meeting lubrication requirements of the different to-be-lubricated parts.

In a possible embodiment, the bottom plate includes a first side and a second side that are opposite to each other. When the gear set rotates, the gear set stirs the lubricating oil, and transports the lubricating oil to the oil collection tank from a side that is of the upper opening and that is close to the first side. Straight sections are disposed on all oil guide plates, the straight sections of all the oil guide plates are disposed at positions of the bottom plate that are close to the second side, and the plurality of straight sections are parallel to each other and fastened at intervals.

In this embodiment, because most lubricating oil stirred by the gear set falls into the oil collection tank from a side that is of the upper opening and that is away from the first side, the straight sections are disposed on all the oil guide plates, and the straight sections are parallel to each other and fastened at intervals near the second side, so that the lubricating oil can be allocated to the oil collection regions when entering the oil collection tank, thereby meeting lubrication requirements of different to-be-lubricated parts.

In a possible embodiment, the side plate includes a first side plate close to the first gear and a second side plate opposite to the first side plate, the first side plate has a first height relative to the bottom plate, the second side plate has a second height relative to the bottom plate, and the first height is less than the second height.

In this embodiment, based on the characteristic that the gear set supplies oil through oil stirring, the height of the first side plate that is in the side plate and that is relatively close to the first gear is set to be less than the height of the second side plate that is relatively away from the first gear, so that the lubricating oil can smoothly pass over the first side plate, and fall into the oil collection tank because the lubricating oil is blocked by the second side plate, thereby achieving a better passive lubrication effect.

In a possible embodiment, the side plate further includes a third side plate protruding on the bottom plate, the third side plate is located between the first side plate and the second side plate, the first side plate has the first height relative to the bottom plate, the third side plate has a third height relative to the bottom plate, and the first height is less than the third height.

In this embodiment, the third side plate dedicated to oil blocking is disposed between the first side plate and the second side plate, so that more lubricating oil stirred by the gear set can be collected in the oil collection tank, thereby achieving a better passive lubrication effect.

In a possible embodiment, the bottom plate includes a first side close to the first gear and a second side opposite to the first side, and the second side is vertically located above the first side or flush with the first side.

In this embodiment, the upper opening may be alternatively tilted, by tilting the bottom plate, toward a direction in which oil is supplied, so that more lubricating oil stirred by the gear set is collected in the oil collection tank, thereby achieving a better passive lubrication effect.

In a possible embodiment, the sealing chamber and the oil collection tank are disposed as an integral structure.

In this embodiment, the oil collection tank and the sealing chamber are disposed as an integral structure, the bottom plate of the oil collection tank may be configured to form a top structure of the sealing chamber, and the side plate of the oil collection tank may also be configured to form a side structure of the sealing chamber, to reduce an overall volume of the oil supply device and further adapt to miniaturization of the transmission.

According to a second aspect, this application further provides a vehicle powertrain, including a motor and the transmission provided in the first aspect of this application. The motor is fastened to the transmission, and the motor is configured to drive a gear set in the transmission to rotate.

Because the vehicle powertrain in this application uses the transmission provided in the first aspect of this application, the vehicle powertrain has a better lubrication effect. When the vehicle powertrain runs at a low speed, the gear set is protected through active lubrication, and when the vehicle powertrain runs at a high speed, the gear set is protected through passive lubrication, so that reliability of the vehicle powertrain is improved, and a service life of the vehicle powertrain is prolonged.

In a possible embodiment, a cooling system is further disposed in the vehicle powertrain, and the cooling system is configured to transport lubricating oil in an oil sump to the motor to cool the motor.

In this embodiment, the vehicle powertrain further transports the lubricating oil in the oil sump to the motor by using the cooling system, to cool the motor, and a structure carrying the lubricating oil does not need to be disposed in the motor, so that integration of the vehicle powertrain is improved, and an overall volume of the vehicle powertrain is controlled.

In a possible embodiment, the cooling system includes an oil inlet pipe and an oil return pipe, both the oil inlet pipe and the oil return pipe are connected between the oil sump and the motor, and after flowing to the motor from the oil inlet pipe to complete cooling, the lubricating oil returns to the oil sump through the oil return pipe.

In this embodiment, a circuit of the cooling system is formed by using the oil inlet pipe and the oil return pipe, so that the lubricating oil transported to the motor through the oil inlet pipe can return to the oil sump through the oil return pipe, thereby implementing circulation and exchange of the lubricating oil that is in the motor and that is used for cooling.

In a possible embodiment, the cooling system further includes a heat exchanger, and the heat exchanger is connected in series to the oil return pipe, and is configured to cool the lubricating oil.

In this embodiment, heat exchange and cooling are performed on the lubricating oil by using the heat exchanger connected in series to the oil return pipe, so that after the high-temperature lubricating oil that flows back in the motor is cooled by the heat exchanger, the lubricating oil can return to the oil sump for repeated use, to prevent a temperature of the transmission from rising excessively quickly.

In a possible embodiment, the motor includes a stator and a rotor that cooperate with each other, and the cooling system separately transports the lubricating oil to the stator and the rotor to cool the motor.

In this embodiment, the motor includes the stator and the rotor, and the lubricating oil separately enters the stator and the rotor, to reduce an overall temperature of the motor and achieve a better cooling effect.

According to a third aspect, this application provides a vehicle, including wheels and the vehicle powertrain provided in the second aspect of this application. The vehicle powertrain is configured to drive the wheels to rotate.

It may be understood that because the vehicle powertrain provided in the second aspect of this application has better lubrication and cooling effects, stability of a vehicle in this application is higher, and transmission efficiency when a motor drives the wheels to rotate is improved.

### BRIEF DESCRIPTION OF DRAWINGS

FIG. 1 is a schematic diagram of an appearance of a vehicle powertrain according to an embodiment of this application;
FIG. 2 is a schematic diagram of a cross section of the vehicle powertrain shown in FIG. 1;
FIG. 3 is a schematic diagram of a lubricating oil flowing manner of a cooling system in the vehicle powertrain shown in FIG. 1;
FIG. 4 is a schematic diagram of oil circuit allocation of a cooling system in the vehicle powertrain shown in FIG. 1;
FIG. 5 is a schematic diagram of an internal structure of a transmission in the vehicle powertrain shown in FIG. 1;
FIG. 6 is a schematic diagram of a structure of a gear set and an oil supply device in the transmission shown in FIG. 5;
FIG. 7 is a schematic diagram of a structure that is of a gear set and an oil supply device in the transmission shown in FIG. 5 and that is observed from another direction;
FIG. 8 is a schematic diagram of a structure of a passive lubrication oil circuit in the transmission shown in FIG. 5;
FIG. 9 is a schematic diagram of a partial structure of the passive lubrication oil circuit in the transmission shown in FIG. 8;
FIG. 10 is a schematic diagram of a structure of an oil supply device in the transmission shown in FIG. 5;
FIG. 11 is a schematic diagram of a structure of another embodiment of an oil supply device in the transmission shown in FIG. 5;
FIG. 12 is a schematic diagram of a structure of another embodiment of an oil supply device in the transmission shown in FIG. 5;
FIG. 13 is a schematic diagram of a structure of another embodiment of an oil supply device in the transmission shown in FIG. 5;
FIG. 14 is a schematic diagram of a cross-sectional structure of one group including one lateral oil spray pipe and one lateral oil transport tank that are parallel to each other in the oil supply device in the transmission shown in FIG. 10;
FIG. 15 is a schematic diagram of a cross-sectional structure of another embodiment of one group including one lateral oil spray pipe and one lateral oil transport tank that are parallel to each other in the oil supply device in the transmission shown in FIG. 10;
FIG. 16 is a schematic diagram of a cross section of another embodiment of the oil supply device in the transmission shown in FIG. 10;
FIG. 17 is a schematic diagram of a structure of another embodiment of the oil supply device in the transmission shown in FIG. 10;
FIG. 18 is a schematic diagram of a structure of another embodiment of the oil supply device in the transmission shown in FIG. 10;
FIG. 19 is a schematic diagram of a structure of another embodiment of the oil supply device in the transmission shown in FIG. 10; and
FIG. 20 is a schematic diagram of a structure of another embodiment of the oil supply device in the transmission shown in FIG. 10.

### DESCRIPTION OF EMBODIMENTS

The following describes the technical solutions in embodiments of this application with reference to accompanying drawings in embodiments of this application. It is clear that described embodiments are merely some but not all of embodiments of this application. All other embodiments obtained by a person of ordinary skill in the art based on the embodiments of this application without creative efforts shall fall within the protection scope of this application.

Sequence numbers, for example, "first" and "second", of components in this specification are only intended to distinguish between described objects, and do not have any sequence or technical meaning. The term "connection" in this application includes both direct and indirect connections unless otherwise specified. In descriptions of this application, it should be noted that orientation or location relationships indicated by terms "above", "below", "front", "rear", "top", "bottom", "inner", "outer", and the like are orientation or location relationships based on the accompanying drawings, and are merely intended for conveniently describing this application and simplifying descriptions, rather than indicating or implying that an apparatus or an element in question needs to have a specific orientation or needs to be constructed and operated in a specific orientation, and therefore cannot be construed as a limitation on this application.

In this application, unless otherwise specified and limited, a first feature is "above" or "below" a second feature may mean that the first feature and the second feature are in direct contact or the first and second features are in indirect contact by using an intermediate medium. In addition, that the first feature is "above" the second feature may be that the first feature is directly above or inclined above the second feature, or only indicates that a level of the first feature is higher than that of the second feature. That the first feature is "below" the second feature may be that the first feature is directly below or inclined below the second feature, or only indicates that a level of the first feature is lower than that of the second feature.

FIG. 1 shows a vehicle powertrain 500 according to an embodiment of this application. The vehicle powertrain 500 includes a motor 300 and a transmission 200. Relative positions of the motor 300 and the transmission 200 are fixed, and there is a transmission connection between the motor 300 and the transmission 200. As a power source of the vehicle powertrain, the motor 300 has a relatively high rotational speed. The transmission 200 with a specific reduction ratio needs to be matched to transmit power output by the motor 300 to wheels of a vehicle, to drive the vehicle to travel. It may be understood that the vehicle equipped with the vehicle powertrain 500 in this application may be an electric vehicle or a hybrid electric vehicle.

Housings are separately disposed for the motor 300 and the transmission 200, to protect the motor 300 and a movement component inside the motor 300 and protect the transmission 200 and a movement component inside the transmission 200. A housing of the motor 300 and a housing of the transmission 200 may be disposed independently of each other, and the housings are connected and fastened after the motor 300 and the transmission 200 are separately assembled. In other embodiments, the housing of the motor 300 and the housing of the transmission 200 may be integrally disposed, as shown in FIG. 1. The vehicle powertrain 500 shown in FIG. 1 includes a housing 510, and internal components of the motor 300 and the transmission 200 are accommodated in the housing 510. Because the relative positions of the motor 300 and the transmission 200 are fixed, the housings of the motor 300 and the transmission 200 are integrally disposed, so that integration of the vehicle powertrain 500 in this application can be improved. In addition, integrally disposing the housing 510 further omits a connection component between the housing of the motor 300 and the housing of the transmission 200, simplifies a structure of the vehicle powertrain 500, and facilitates miniaturization of the vehicle powertrain 500.

Refer to a schematic diagram of a cross section of the vehicle powertrain 500 shown in FIG. 2. To clearly indicate an internal structure of the vehicle powertrain 500, a cross-sectional line in a cross-sectional structure is omitted in FIG. 2. The motor 300 has a stator 310 and a rotor 320. The stator 310 is fastened to the housing 510, and the rotor 320 is rotatably connected to the housing 510. The stator 310 is sleeved outside the rotor 320, and the stator 310 is configured to drive the rotor 320 to rotate. In the schematic diagram of FIG. 2, the rotor 320 further includes an output section 321 protruding from the stator 310, and there is a transmission connection between the output section 321 and the transmission 200 to transmit power to the transmission 200, so that power output of the motor 300 is implemented. In some embodiments, the output section 321 may be alternatively constructed as a rotating shaft structure fastened to the rotor 320, and the rotor 320 rotates by driving a rotating shaft, to implement a function of outputting rotation power from the output section 321 by the motor 300.

In the vehicle powertrain 500 in this application, a transmission connection manner between the motor 300 and the transmission 200 may be implemented in a plurality of manners such as gear engagement transmission, chain transmission, and belt transmission. In the schematic diagram of FIG. 2, a gear section 322 is further disposed on the output section 321 of the rotor 320, a driven gear 218 corresponding to the gear section 322 is disposed in the transmission 200, and the gear section 322 is engaged with the driven gear 218, to implement the transmission connection between the motor 300 and the transmission 200.

In an embodiment, as shown in FIG. 2, the vehicle powertrain 500 in this application further includes a cooling system 600. The cooling system 600 is configured to separately implement cooling and lubrication functions on the motor 300 and the transmission 200. Specifically, the cooling system 600 may be connected to the inside of the motor 300, and transport lubricating oil used for cooling to the motor 300, to implement a cooling function on the motor 300.

The cooling system 600 includes an oil inlet pipe 610 and an oil return pipe 620 that are separately connected to the motor 300. A side (which may also be understood as an inlet end of the oil inlet pipe 610) that is of the oil inlet pipe 610 and that is away from the motor 300 is connected to a part storing lubricating oil, and a side (which may also be understood as an outlet end of the oil return pipe 620) that is of the oil return pipe 620 and that is away from the motor 300 is also connected to the part storing lubricating oil. The part storing lubricating oil may be disposed inside the vehicle powertrain 500, or may be disposed as an external oil sump. The lubricating oil needs to have a cooling function. After the lubricating oil flows to the inside of the motor 300 through the oil inlet pipe 610, heat exchange is performed between the lubricating oil and the motor 300, and the lubricating oil returns, through the oil return pipe 620, to the part storing lubricating oil, to implement circulation of the lubricating oil and cool the motor 300.

The oil inlet pipe 610 and the oil return pipe 620 may be independent pipelines, or may be at least partially constructed, as shown in FIG. 2, as through-holes disposed inside the housing 510. In this case, the oil inlet pipe 610, the motor 300, and the oil return pipe 620 form a lubricating oil circulation circuit. In a working process of the motor 300, a relatively large amount of heat is generated in a process of driving the rotor 320 by the stator 310. In the embodiment shown in FIG. 2, the lubricating oil transported by the oil inlet pipe 610 further flows through the stator 310 and the rotor 320 to separately cool the stator 310 and the rotor 320. The stator 310 and the rotor 320 are also separately connected to the oil return pipe 620, and the lubricating oil that completes heat exchange is transported to the oil return pipe 620.

In an embodiment, referring back to FIG. 1, the cooling system 600 further includes a heat exchanger 630. The heat exchanger 630 is connected in series to the oil return pipe 620. After being heat-exchanged and cooled by the heat exchanger 630, the lubricating oil that completes heat exchange is transported, through the oil return pipe 620, back to the part storing lubricating oil, to ensure that the lubricating oil stored in the part storing lubricating oil is at a low temperature, and can enter the motor 300 through the oil inlet pipe 610 again for heat exchange.

In the schematic diagram of FIG. 2, a first interface 621 and a second interface 622 that are configured to connect to the heat exchanger 630 are disposed on a path of the oil return pipe 620. The lubricating oil in the oil return pipe 620 enters the heat exchanger 630 through the first interface 621 to implement heat exchange, and receives, through the second interface 622, the lubricating oil obtained after heat exchange of the heat exchanger 630. It should be noted that FIG. 2 shows only one lubricating oil flowing manner of the cooling system 600. In other embodiments, a flowing path of the lubricating oil in the cooling system 600 may be alternatively shown in FIG. 3. All through-holes at the cross-sectional position are disposed as the oil inlet pipe 610, and an oil return pipe (not shown in the figure) is disposed at another cross-sectional position to implement circulation of the lubricating oil. Alternatively, in some embodiments, in the cooling system 600, an oil return pipe (not shown in the figure) is disposed at the cross-sectional position, and an oil inlet pipe (not shown in the figure) is disposed at another cross-sectional position, to also achieve a circulation effect of the lubricating oil.

In some embodiments, when the part storing lubricating oil is disposed inside the housing 510 of the vehicle powertrain 500, the bottom of the housing 510 may be further disposed as an oil sump storing lubricating oil. In this case, only the oil inlet pipe 610 may be disposed in the cooling system 600, and the lubricating oil transported to the stator 310 or the rotor 320 may flow downward under an action of gravity after flowing out of the motor 300, and flow to the oil sump. In other words, in this embodiment, the oil return pipe 620 may be omitted, or an inner wall of the housing 510 may be considered as the oil return pipe 620 as a whole, to guide the lubricating oil to flow to the oil sump. It may be understood that in this embodiment, the heat exchanger 630 is preferably disposed above the oil inlet pipe 610, and is configured to cool the lubricating oil in the cooling system 600 (as shown in FIG. 3). The lubricating oil in the cooling system 600 is repeatedly used lubricating oil. Therefore, regardless of a position at which the heat exchanger 630 is disposed in the cooling system 600, a cooling function can be implemented on the lubricating oil, and a function implementation of the cooling system 600 in this application is not affected.

It should be noted that in the cooling system 600 shown in FIG. 3, lubricating oil in both a part of the oil inlet pipe 610 that supplies oil to the rotor 320 and a part of the oil inlet pipe 610 that supplies oil to the stator 310 flows out from the first interface 621 connected to the heat exchanger 630, and the two parts are respectively connected to the rotor 320 and the stator 310. In this embodiment, the oil return pipe 620 may be connected to the second interface 622, to implement a cooling function of the heat exchanger 630 on the lubricating oil. Alternatively, the oil inlet pipe 610 may be connected to the second interface 622, to implement a cooling function of the lubricating oil in a process in which the oil inlet pipe 610 transports the lubricating oil.

In addition, in the schematic diagram of FIG. 3, a direction in which the cooling system 600 supplies oil to the rotor 320 is from the left side to the right side in the figure, and a direction in which the cooling system 600 supplies oil to the stator 310 is from the right side to the left side in the figure. In other words, the cooling system 600 transports oil to the stator 310 and the rotor 320 in opposite directions. In some embodiments, when the part storing lubricating oil is located on a side of the motor 300, the cooling system 600 may be alternatively configured to separately transport lubricating oil toward the rotor 320 and the stator 310 in a same direction, to shorten a length of the oil inlet pipe 610 and control an overall volume of the vehicle powertrain 500 in this application.

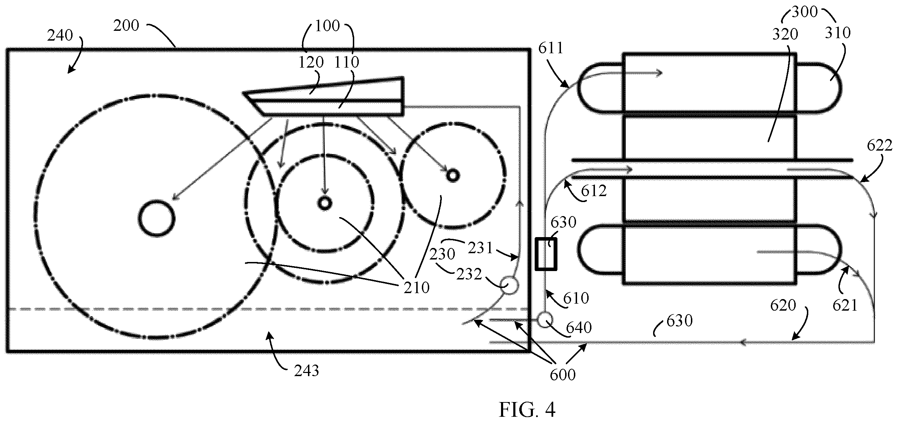

Refer to a schematic diagram of an oil circuit of the cooling system 600 in the vehicle powertrain 500, shown in FIG. 4, in this application. In the schematic diagram of FIG. 4, the cooling system 600 separately acts on the motor 300 and the transmission 200. The transmission 200 includes a box body, an inner cavity 240 is formed in the box body, and the bottom of the inner cavity 240 is constructed as an oil sump 243. The oil sump 243 is configured to carry the lubricating oil, in other words, the oil sump 243 in this embodiment is used as the part storing lubricating oil. The oil inlet pipe 610 and the oil return pipe 620 of the cooling system 600 are separately connected to the oil sump 243. The oil inlet pipe 610 includes a first oil inlet pipe 611 and a second oil inlet pipe 612. The first oil inlet pipe 611 and the second oil inlet pipe 612 may be separately connected to the oil sump 243, or as shown in FIG. 4, the first oil inlet pipe 611 and the second oil inlet pipe 612 first converge outside the oil sump 243 and are then connected to the oil sump 243. The oil return pipe 620 includes a first oil return pipe 621 and a second oil return pipe 622. The first oil return pipe 621 and the second oil return pipe 622 may be separately connected to the oil sump 243, or as shown in FIG. 4, the first oil return pipe 621 and the second oil return pipe 622 may converge outside the oil sump 243 and are then connected to the oil sump 243.

An end that is of the first oil inlet pipe 611 and that is away from the oil sump 243 is connected to the stator 310, to transport the lubricating oil in the oil sump 243 to the stator 310 to implement cooling. An end that is of the first oil return pipe 621 and that is away from the oil sump 243 is also connected to the stator 310, to transport the cooled lubricating oil in the stator 310 back to the oil sump 243. An end that is of the second oil inlet pipe 612 and that is away from the oil sump 243 is connected to the rotor 320, to transport the lubricating oil in the oil sump 243 to the rotor 320 to implement cooling. An end that is of the second oil return pipe 622 and that is away from the oil sump 243 is also connected to the rotor 320, to transport the cooled lubricating oil in the rotor 320 back to the oil sump 243.

It may be understood that alternatively, the first oil inlet pipe 611 and the second oil inlet pipe 612 may be separately connected to the heat exchanger 630, to separately transport the lubricating oil flowing back from the stator 310 and the rotor 320 to the heat exchanger 630 for heat exchange. Alternatively, as shown in FIG. 4, the first oil inlet pipe 611 and the second oil inlet pipe 612 first converge and are then connected to the heat exchanger 630, to transport, to the heat exchanger 630 for cooling, the lubricating oil to be transported to the motor 300.

In the embodiment shown in FIG. 4, an oil pump 640 is further disposed above the oil inlet pipe 610, and the oil pump 640 is configured to provide power to drive the lubricating oil to circulate between the motor 300 and the oil sump 243. It may be understood that the oil pump 640 may be alternatively disposed above the oil return pipe 620, or the oil pump 640 may be disposed in the heat exchanger 630, to drive the lubricating oil to circulate and continuously cool the motor 300.

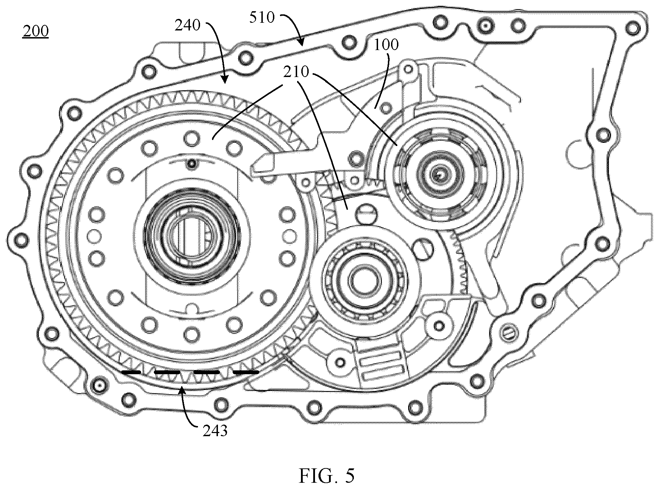

In addition, FIG. 4 further shows a lubricating oil circuit of the cooling system 600 for the transmission 200. Synchronously referring to FIG. 5, the transmission 200 further includes a gear set 210, an oil supply device 100, and an oil transport component 230 that are accommodated in the inner cavity 240 (refer to FIG. 4). Gears in the gear set 210 are separately rotatably connected to the box body, and the oil supply device 100 is disposed on an upper side of the gear set 210, and is fastened to the box body (the housing 510). In other words, the oil supply device 100 is located on a side that is of the gear set 210 and that is away from the oil sump 243. The oil supply device 100 includes a sealing chamber 110 and an oil collection tank 120. The sealing chamber 110 is located below the oil collection tank 120. The oil transport component 230 includes an oil transport pipeline 231 and an oil transport pump 232. One end of the oil transport pipeline 231 is connected to the oil sump 243, and the other end of the oil transport pipeline 231 is connected to the oil supply device 100. Specifically, referring to FIG. 4, the oil transport pipeline 231 is connected to the sealing chamber 110 of the oil supply device 100. The oil transport pump 232 is connected in series to the oil transport pipeline 231, and the oil transport pump 232 is configured to transport the lubricating oil to the sealing chamber 110 of the oil supply device 100 through the oil transport pipeline 231. After receiving the lubricating oil transported by the oil transport component 230, the oil supply device 100 may guide the lubricating oil to flow to the gear set 210 below the oil supply device 100 through a pipeline connected to the sealing chamber 110, to implement lubrication and cooling functions on the gear set 210.

It may be understood that the oil transport component 230 and the oil supply device 100 in the transmission 200 may be understood as a part of the cooling system 600. In a rotation process of the gear set 210, friction occurs, and heat is generated. The lubricating oil may be transported to the gear set 210 through cooperation of the oil transport component 230 and the oil supply device 100, to reduce internal friction of the gear set 210. The lubricating oil transported to the gear set 210 may continue to flow downward to the oil sump 243, and the lubricating oil can take away a part of heat generated by the gear set 210, to achieve a specific cooling effect.

It may be understood that in the transmission 200 provided in this embodiment of this application, the box body of the transmission 200 is the housing 510 shown in FIG. 1 and FIG. 2. In other embodiments, the box body of the transmission 200 may be alternatively separately disposed. Because the oil transport component 230 is used as a part of the cooling system 600, the oil transport pump 232 in the oil transport component 230 may be further used as the oil pump 640 in the cooling system 600. In other words, the oil transport pipeline 231 and the oil inlet pipe 610 converge outside the oil sump 243, and the oil transport pump 232 is disposed between the oil sump 243 and a junction of the oil transport pipeline 231 and the oil inlet pipe 610. In a process in which the oil transport pump 232 drives the lubricating oil to flow to the oil supply device 100 through the oil transport pipeline 231, the oil transport pump 232 further synchronously drives the lubricating oil to enter the motor 300 through the oil inlet pipe 610 to cool the motor 300. It may be understood that in this embodiment, a three-way valve may be disposed at the junction between the oil transport pipeline 231 and the oil inlet pipe 610, to split the lubricating oil driven by the oil transport pump 232.

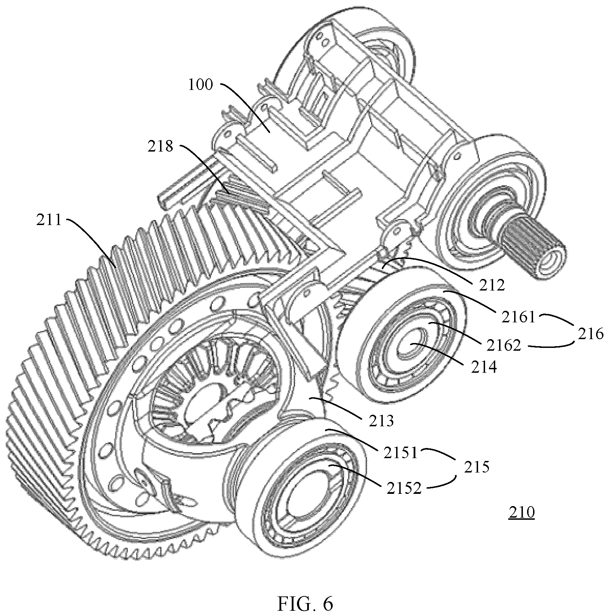

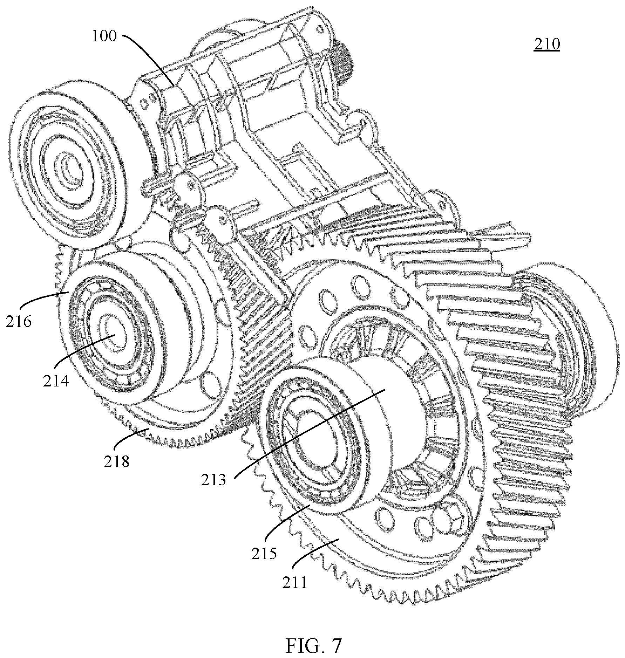

Referring to schematic diagrams of internal structures of the transmission 200 shown in FIG. 6 and FIG. 7, the gear set 210 includes a driven gear 218, a first gear 211, and a second gear 212. The driven gear 218, the first gear 211, and the second gear 212 are separately rotatably connected to the box body of the transmission 200, and the first gear 211 and the second gear 212 are engaged with each other. The driven gear 218 is further fastened to the second gear 212. Specifically, the gear set 210 further includes a second gear shaft 214. The second gear shaft 214 passes through rotation centers of the driven gear 218 and the second gear 212, and is fastened to the driven gear 218 and the second gear 212, to fasten the driven gear 218 to the second gear 212. After the driven gear 218 is driven by the rotor 320 to rotate, the second gear 212 fastened to the driven gear 218 synchronously rotates with the driven gear 218. The second gear 212 further transmits the rotation action to the first gear 211 through engagement with the first gear 211.

Therefore, in the vehicle powertrain 500 in this application, the rotor 320 is driven to rotate by using the stator 310 of the motor 300, and then rotation power output by the motor 300 is transmitted to the first gear 211 through engagement of the gear section 322 of the rotor 320 and the driven gear 218 and engagement of the second gear 212 and the first gear 211. It can be learned from the schematic diagrams of FIG. 6 and FIG. 7 that a quantity of teeth of the gear section 322 is less than a quantity of teeth of the driven gear 218, and a quantity of teeth of the second gear 212 is also less than a quantity of teeth of the first gear 211. Therefore, a rotational speed of the rotor 320 is decelerated through two stages before reaching the first gear 221, and the first gear 221 outputs the rotation to a wheel end, so that the transmission 200 can be decelerated.

In some embodiments, the second gear 212 and the driven gear 218 may be alternatively integrally disposed, in other words, the second gear 212 may be further used as the driven gear. When being engaged with the first gear 211, the second gear 212 is further directly engaged with the gear section 322 of the rotor 320. In this case, because the quantity of teeth of the gear section 322 is less than the quantity of teeth of the first gear 211, the transmission 200 can also be decelerated in this embodiment. In addition, a volume of the transmission 200 can be further reduced in an embodiment in which the second gear 212 is used as the driven gear, to further reduce the overall volume of the vehicle powertrain 500.

In other embodiments, the gear set 210 may further include a third gear (not shown in the figure) and a fourth gear (not shown in the figure). The third gear is fastened to the first gear 211, the third gear is engaged with the fourth gear, and a rotation action of the first gear 211 is transmitted to the fourth gear, to achieve a next-stage deceleration effect of the gear set 210. In other words, the first gear 211 may be used as an output gear of the gear set 210 in the transmission 200, to output rotation power transmitted by the transmission 200; or the first gear 211 may be used as a transition gear of the gear set 210 in the transmission 200, to achieve a one-stage deceleration effect of the gear set 210 through engagement with the second gear 212.

At an end of the second gear 212, in some embodiments, the second gear 212 may also implement a transmission connection to the driven gear 218 through transition of a pair of intermediate gears. In other words, a quantity of gears of the gear set 210 in the transmission 200 in this application is not limited, and a quantity of transmission stages in the gear set 210 is not limited, either. The gear set 210 can be lubricated and cooled through cooperation of the oil supply device 100 and the oil transport component 230.

Still referring to the internal structures of the transmission 200 shown in FIG. 6 and FIG. 7, the gear set 210 further includes a first gear shaft 213, a first bearing 215, and a second bearing 216. The first gear shaft 213 passes through a rotation center of the first gear 211, and is fastened to the first gear 211. There are two first bearings 215, and the two first bearings 215 are fastened on both sides of the first gear 211 in a length direction of the first gear shaft 213. In other words, the first gear 211 is located between the two first bearings 215 in the length direction of the first gear shaft 213. The first bearing 215 includes a first bearing stator 2151 and a first bearing rotor 2152, and the first bearing rotor 2152 may rotate within the first bearing stator 2151. Each first bearing stator 2151 is fastened to the box body of the transmission 200, and each first bearing rotor 2152 is fastened to the first gear shaft 213. Therefore, the first gear shaft 213 can be rotatably connected to the box body through rotation of the two first bearing rotors 2152 relative to the first bearing stators 2151. The first gear 211 is fastened to the first gear shaft 213, so that the first gear 211 is rotatably connected to the box body of the transmission 200 through cooperation of the first gear shaft 213 and the first bearing 215.

In the schematic diagram of FIG. 6, the first gear shaft 213 is constructed as a U-shaped support structure, and includes a support part 2131 fastened to the first bearing 215 and connection parts 2132 separately arranged on both sides of the support part 2131. The two connection parts 2132 are separately fastened to the first gear 211, to fasten the first gear shaft 213 to the first gear 211.

There are also two second bearings 216. In a length direction of the second gear shaft 214, the two second bearings 216 are fastened on both sides of the second gear 212, and are also fastened on both sides of the driven gear 218. In other words, both the second gear 212 and the driven gear 218 are located between the two second bearings 216 in the length direction of the second gear shaft 214. The second bearing 216 includes a second bearing stator 2161 and a second bearing rotor 2162, and the second bearing rotor 2162 may rotate within the second bearing stator 2161. Each second bearing stator 2161 is fastened to the box body of the transmission 200, and each second bearing rotor 2162 is fastened to the second gear shaft 214. Therefore, the second gear shaft 214 can be rotatably connected to the box body through rotation of the two second bearing rotors 2162 relative to the second bearing stators 2161. The second gear 212 is fastened to the second gear shaft 214, so that the second gear 212 is rotatably connected to the box body of the transmission 200 through cooperation of the second gear shaft 214 and the second bearing 216.

Engagement transmission between the first gear 211 and the second gear 212 causes friction between the first gear 211 and the second gear 212. In addition, a higher rotational speed output by the motor 300 indicates a larger friction force generated between the first gear 211 and the second gear 212 and a larger amount of generated heat. Further, within the first bearing 215 and the second bearing 216, in a process of high-speed rotation of the first gear 211 and the second gear 212, a friction force between the first bearing stator 2151 and the first bearing rotor 2152 and a friction force between the second bearing stator 2161 and the second bearing rotor 2162 also synchronously increase, leading to a rise of heat separately generated by the first bearing 215 and the second bearing 216.

The lubricating oil transported by the oil supply device 100 to the gear set 210 may purposefully act on the foregoing parts at which friction exists and a temperature rises relatively quickly, to reduce, by using a stable oil film formed in an engagement part (defined as a first engagement part) of the first gear 211 and the second gear 212, the inside of the first bearing 215, and the inside of the second bearing 216, wear caused by metal friction, so that transmission efficiency of the gear set 210 is improved, thereby improving reliability of the transmission 200 and prolonging a service life of the transmission 200. In this embodiment, the first engagement part, a position of the first bearing 215, and a position of the second bearing 216, and the like that are in the gear set 210 and at which friction exists and a temperature rises relatively quickly are defined as to-be-lubricated parts of the gear set 210. That the oil supply device 100 supplies the lubricating oil to the gear set 210 means that the oil supply device 100 supplies the lubricating oil to the to-be-lubricated parts of the gear set 210.

It may be understood that when the gear set 210 further includes the third gear and the fourth gear, the third gear is engaged with the fourth gear at a second engagement part, and the oil supply device 100 may further correspondingly transport the lubricating oil to the second engagement part. Alternatively, when the gear set 210 further includes a third bearing (not shown in the figure) and a fourth bearing (not shown in the figure), the oil supply device 100 may also correspondingly transport the lubricating oil to the third bearing and the fourth bearing. In other words, other parts at which a friction force exists in the gear set 210 may also be defined as to-be-lubricated parts, and to-be-lubricated parts of the gear set 210 may cover the foregoing parts at which a temperature rises because of friction, but are not limited to the foregoing parts. In other embodiments, a to-be-lubricated part may be alternatively randomly specified in the gear set 210 as actually required, and the oil supply device 100 lubricates and cools the specified to-be-lubricated part.

It should be noted that, to lubricate the inside of the first bearing 215 and the inside of the second bearing 216, the oil supply device 100 may transport the lubricating oil from a side surface of a junction between the first bearing stator 2151 and the first bearing rotor 2152 and from a side surface of a junction between the second bearing stator 2161 and the second bearing rotor 2162, to respectively lubricate the inside of the first bearing 215 and the inside of the second bearing 216. In other embodiments, the oil supply device 100 may also supply the lubricating oil to the top of the first bearing 215 and the top of the second bearing 216, to implement penetration of the lubricating oil into the first bearing rotor 2152 and the second bearing rotor 2162 through an opening (not shown in the figure) on the top of the first bearing stator 2151 and an opening (not shown in the figure) on the top of the second bearing stator 2161, to respectively lubricate the inside of the first bearing 215 and the inside of the second bearing 216.

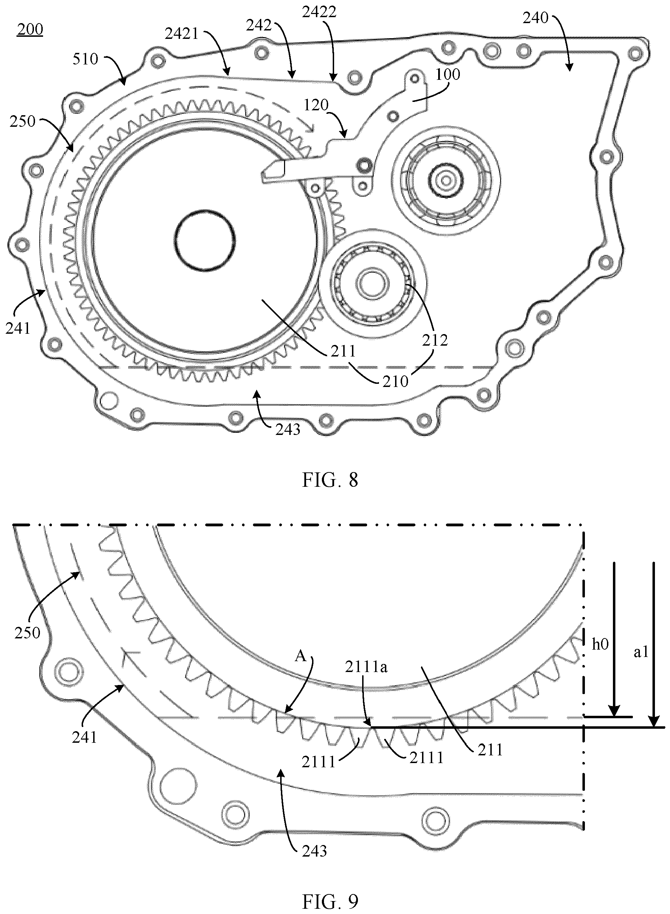

In this application, the oil supply device 100 can implement an active lubrication function on the gear set 210 through the connection between the sealing chamber 110 and the oil transport component 230. In addition, the oil collection tank 120 in the oil supply device 100 can implement a passive lubrication function on the gear set 210. Referring to FIG. 8, on a side that is of the first gear 211 and that is away from the second gear 212, the first gear 211 is further spaced from the inner cavity 240 of the box body to form an oil stirring channel 250. Specifically, the inner cavity 240 of the box body includes a first side wall 241 and a top wall 242. The first side wall 241 is located on the side that is of the first gear 211 and that is away from the second gear 212, and the first side wall 241 is spaced from the first gear 211. The top wall 242 is located above the first side wall 241, and is connected to the first side wall 241. The top wall 242 is also spaced from the first gear 211. Both the first side wall 241 and the top wall 242 that are connected are spaced from the first gear 211 to form the oil stirring channel 250.

Further, the bottom of the first gear 211 is further located in the oil sump 243, and a liquid level of the lubricating oil carried in the oil sump 243 is higher than the bottom of the first gear 211, so that the bottom of the first gear 211 is immersed in the lubricating oil. The side that is of the first gear 211 and that is away from the second gear 212 rotates from the bottom of the first gear 211 to the top of the first gear 211. Therefore, in a working process, the first gear 211 may continuously bring the lubricating oil in the oil sump 243 into the oil stirring channel 250. After a rotational speed of the first gear 211 reaches or exceeds a specific threshold (for example, 1000 revolutions per minute), the first gear 211 may stir the lubricating oil to move in the oil stirring channel 250.

The oil supply device 100 is located on a side that is of the gear set 210 and that is away from the oil sump 243, and the oil collection tank 120 of the oil supply device 100 is disposed at the end of the oil stirring channel 250, in other words, the oil supply device 100 is disposed corresponding to the oil stirring channel 250, so that the oil collection tank 120 faces the oil stirring channel 250, and collects the lubricating oil. After the rotational speed of the first gear 211 exceeds a specific threshold, the lubricating oil stirred by the first gear 211 by using the oil stirring channel 250 falls into the oil collection tank 120, and then the lubricating oil is guided to flow to the gear set 210 below the oil collection tank 120 through a pipeline connected to the oil collection tank 120, to implement a passive lubrication function on the gear set 210.

In the embodiment of FIG. 8, the oil stirring channel 250 extends over the top of the first gear 211 toward a side of the second gear 212. In this case, the oil supply device 100 is further located on a side that is of the first gear 211 and that is close to the second gear 212, and a height of the oil supply device 100 is less than a height of the top of the first gear 211. Because the side that is of the first gear 211 and that is away from the second gear 212 rotates from the bottom to the top of the first gear 211, the side that is of the first gear 211 and that is close to the second gear 212 rotates from top to bottom. It may be understood that on the side that is of the first gear 211 and that is away from the second gear 212, the lubricating oil in the oil stirring channel 250 moves from the oil sump 243 to the top wall 242. As the side that is of the first gear 211 and that is close to the second gear 212 rotates downward, the lubricating oil in the oil stirring channel 250 moves from the top wall 242 to the oil sump 243. In this case, the height of the oil supply device 100 is less than the height of the top of the first gear 211, to ensure that the oil collection tank 120 receives the lubricating oil transported through the oil stirring channel 250.

In the embodiment of FIG. 8, the top wall 242 further includes a first end face 2421 close to the first side wall 241 and a second end face 2422 opposite to the first end face 2421. It may be understood that on a path of the oil stirring channel 250, the lubricating oil moves from a side of the first end face 2421 to a side of the second end face 2422. In other words, the second end face 2422 is closer to the end of the oil stirring channel 250 than the first end face 2421, or the second end face 2422 is closer to the oil collection tank 120 than the first end face 2421. In an embodiment, the second end face 2422 is vertically disposed below the first end face 2421, to further guide the lubricating oil in the oil stirring channel 250 to ensure that the lubricating oil in the oil stirring channels 250 flows to the oil collection tank 120.

In addition, at a position at which the bottom of the first gear 211 is immersed in the lubricating oil in the oil sump 243, a distance h0 between the liquid level of the lubricating oil in the oil sump 243 and the rotation center of the first gear 211 is defined to be less than or equal to a radius a1 of a dedendum circle A of the first gear 211. Referring to a partial schematic diagram of FIG. 9, in the first gear 211, a dedendum part 2111a of any two transmission teeth 2111 of the first gear 211 is aligned with the dedendum circle A of the first gear 211. The distance h0 between the liquid level of the lubricating oil in the oil sump 243 and the rotation center of the first gear 211 is set to be less than or equal to the radius a1 of the dedendum circle A of the first gear 211, to ensure that the lubricating oil carried in the oil sump 243 at least completely immerses the transmission tooth 2111 at the bottom of the first gear 211, so that a depth of the first gear 211 immersed in the lubricating oil is ensured, thereby ensuring that after the rotational speed of the first gear 211 reaches a specific threshold, sufficient lubricating oil can be stirred into the oil supply device 100, and a reliable passive lubrication effect on the gear set 210 is achieved.

Therefore, on a side of the transmission 200 in this application, the oil supply device 100 may receive the lubricating oil supplied by the oil transport component 230 and the lubricating oil transported by the first gear 211 through the oil stirring channel 250, to respectively implement active lubrication and passive lubrication functions on the gear set 210. The vehicle powertrain 500 in this application outputs a rotational speed to drive the vehicle to travel. In addition, a speed of the vehicle changes in the traveling process, and the rotational speed output by the vehicle powertrain 500 changes accordingly. The vehicle powertrain 500 has a high-speed working condition and a low-speed working condition, and amounts of lubricating oil required by the motor 300 and the transmission 200 in the two working conditions are different. It may be understood that when the vehicle powertrain 500 is in the low-speed working condition, the vehicle powertrain 500 generates a relatively small amount of heat, and a lubricating oil requirement is relatively small. In this case, the oil supply device 100 can implement active lubrication on the gear set 210 with cooperation of the oil transport component 230, and meet a working requirement of the gear set 210. When the vehicle powertrain 500 is in the high-speed working condition, the vehicle powertrain 500 generates a relatively large amount of heat, and a lubricating oil requirement is relatively large. In this case, the first gear 211 with a relatively high rotational speed can transport the lubricating oil in the oil sump 243 to the oil supply device 100 through the oil stirring channel 250, to achieve a passive lubrication effect.

It may be understood that the low-speed working condition and the high-speed working condition of the transmission 200 in this application are compared relative to only a same transmission 200. For different vehicle powertrains 500, a passive lubrication intervention occasion and the oil amount of the transmission 200 may be adjusted by using the vehicle powertrain in the solution of this application because of factors such as a power difference between motors 300 and a difference in transmission ratios of transmissions 200, to meet working requirements of the different vehicle powertrains 500. For example, the amount of lubricating oil transported to the oil supply device 100 by the first gear 211 through the oil stirring channel 250, a rotational speed threshold for implementing an oil stirring function by the first gear 211, or the like may be adjusted by setting a capacity of the oil sump 243 in the transmission 200, the liquid level of the lubricating oil, a width of the oil stirring channel 250 formed between the first gear 211 and the inner cavity 240, or the like, so that the passive lubrication intervention occasion and the oil amount of passive lubrication can be adjusted.

Correspondingly, in terms of active lubrication, power of the oil transport pump 232 in the oil transport component 230 in the vehicle powertrain 500 in this application may also be adjusted to correspondingly adjust an amount of lubricating oil of active lubrication, to meet working requirements of different vehicle powertrains 500. It may be understood that in the low-speed working condition, a rotational speed of the gear set 210 may be relatively high or relatively low. In this case, the oil transport pump 232 may also adjust power of the oil transport pump 232, so that the oil supply device 100 can also correspondingly adjust an amount of transported lubricating oil when the rotational speed of the gear set 210 is low, to match a synchronous lubrication requirement of the gear set 210 in the low-speed working condition. In terms of passive lubrication, because a higher rotational speed of the first gear 211 indicates a larger amount of lubricating oil stirred and transported to the oil collection tank 120 by the first gear 211, the transmission 200 in this application further has a passive lubrication adaptive capability. In other words, the rotational speed of the first gear 211 is positively correlated with the amount of lubricating oil received by the gear set 210.

In addition, in the vehicle powertrain 500 in the solution of this application, the oil transport pump 232 may be controlled in working conditions of different rotational speeds, so that the oil supply device 100 performs only active lubrication on the gear set 210, or the oil supply device 100 performs only passive lubrication on the gear set 210, or even the oil supply device 100 performs both active lubrication and passive lubrication on the gear set 210, to meet lubrication and cooling requirements of the gear set 210 at different rotational speeds. In an embodiment, when the vehicle powertrain 500 controls a rotational speed of the motor 300 to be less than 2000 revolutions per minute, only the oil transport pump 232 is controlled to transport the lubricating oil to the oil supply device 100, to perform active lubrication on the gear set 210. In this case, a rotational speed output by the transmission 200 may be less than 1000 revolutions per minute. When the rotational speed of the motor 300 is greater than or equal to 2000 revolutions per minute, the lubricating oil stirred by the first gear 211 can enter the oil collection tank 120 through the oil stirring channel 250. In this case, the oil supply device 100 lubricates the gear set 210 by using the lubricating oil transported through the oil stirring channel 250. When the rotational speed of the motor 300 is greater than or equal to 2000 revolutions, the oil transport pump 232 may continue to work, and continuously provide active lubrication to the gear set 210; or the oil transport pump 232 may stop working, and the oil supply device 100 provides only passive lubrication to the gear set 210.

In some scenarios, the gear set 210 may include other parts that need to be only passively or actively lubricated when the transmission 200 works, to meet working requirements. For example, the gear set 210 includes some parts for which only an oil amount of active lubrication needs to be provided to meet working requirements in both the high-speed working condition and the low-speed working condition of the transmission 200. Alternatively, the gear set 210 includes other parts that do not need to be lubricated when the transmission 200 is in the low-speed working condition and that need to be passively lubricated when the transmission 200 is in the high-speed working condition to meet working requirements. For the foregoing parts of the gear set 210, an oil transport route may be further correspondingly configured for the oil supply device 100, to separately meet working requirements of the parts.

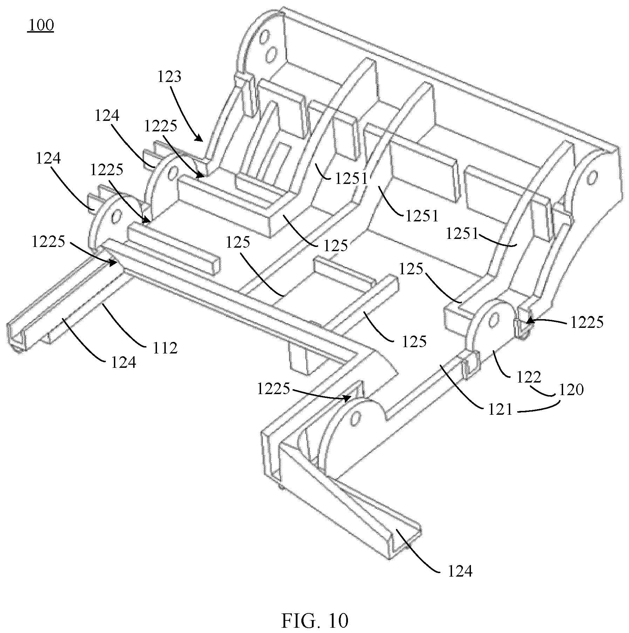

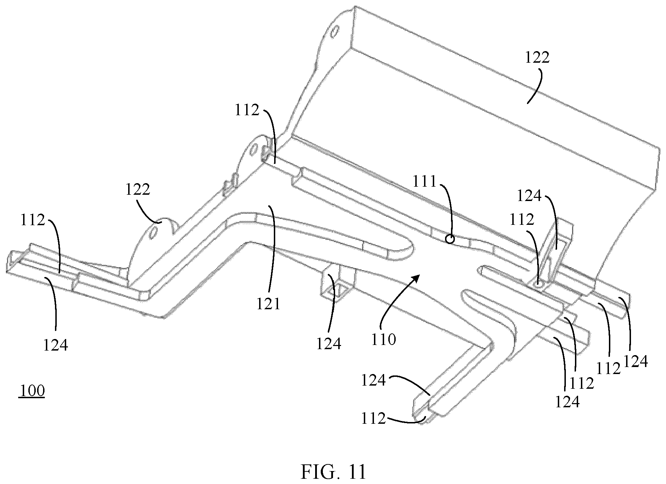

Referring to diagrams of an appearance of an oil supply device 100 that is provided in an embodiment of this application and that is shown in FIG. 10 and FIG. 11, the oil supply device 100 includes an oil collection tank 120 and a sealing chamber 110. The oil collection tank 120 is fastened to the sealing chamber 110, and the oil collection tank 120 is located above the sealing chamber 110. The inside of the sealing chamber 110 is a sealed structure, and an oil inlet port 111 and several oil spray pipes 112 are further disposed outside the sealing chamber 110. The oil inlet port 111 and the several oil spray pipes 112 are all connected to the internal sealed structure of the sealing chamber 110. The oil inlet port 111 is configured to connect to the oil transport pipeline 231 of the oil transport component 230, and the oil transport component 230 transports the lubricating oil in the oil sump 243 to the sealing chamber 110 through the oil transport pipeline 231. The oil spray pipes 112 also connected to the sealing chamber 110 separately extend away from the sealing chamber 110. Specifically, each oil spray pipe 112 extends toward one to-be-lubricated part of the gear set 210. The lubricating oil transported from the oil inlet port 111 to the sealing chamber 110 causes specific pressure in the closed sealing chamber 110, and is sprayed from the sealing chamber 110 through each oil spray pipe 112, to act on each to-be-lubricated part of the gear set 210 and to transport the lubricating oil to the to-be-lubricated part. It may be understood that a quantity of oil spray pipes 112 may correspond to and match a quantity of to-be-lubricated parts of the gear set 210, in other words, each oil spray pipe 112 correspondingly extends toward one to-be-lubricated part of the gear set 210, to achieve an active lubrication effect on all the to-be-lubricated parts of the gear set 210.

The oil collection tank 120 includes a bottom plate 121 and a side plate 122. The bottom plate 121 is fastened to the sealing chamber 110, and the side plate 122 is disposed on a periphery of the bottom plate 121, so that an upper opening 123 is formed above the bottom plate 121. The upper opening 123 is an opening of the oil collection tank 120, and the lubricating oil transported from the oil stirring channel 250 enters the oil collection tank 120 through the upper opening 123. The oil collection tank 120 is also connected to oil transport tanks 124, and a quantity of oil transport tanks 124 in the oil supply device 100 is the same as the quantity of oil spray pipes 112. The oil transport tanks 124 also separately extend away from the oil collection tank 120, and each oil transport tank 124 extends toward one to-be-lubricated part of the gear set 210, to transport the lubricating oil collected in the oil collection tank 120 to each to-be-lubricated part of the gear set 210.

It may be understood that each oil spray pipe 112 extends toward one to-be-lubricated part of the gear set 210, and each oil transport tank 124 also extends toward one to-be-lubricated part of the gear set 210. Each oil transport tank 124 may be set to extend in parallel to one oil spray pipe 112, to act on one to-be-lubricated part of the gear set 210. In other words, in the oil supply device 100 in this application, each oil spray pipe 112 and one oil transport tank 124 corresponding to the oil spray pipe 112 are specified as one group, and the oil spray pipe 112 and the oil transport tank 124 in the same group extend in a same direction, and act on one to-be-lubricated part of the gear set 210, to transport the lubricating oil. When the oil supply device 100 performs active lubrication by using the sealing chamber 110, the oil spray pipe 112 extending from the sealing chamber 110 to the to-be-lubricated part may transport the lubricating oil transported by the oil transport component 230. When the oil supply device 100 performs passive lubrication by using the oil collection tank 120, the oil transport tank 124 extending from the oil collection tank 120 to the to-be-lubricated part may transport the lubricating oil transported by the first gear 211. Therefore, the oil supply device 100 in this application may supply the lubricating oil to each to-be-lubricated part of the gear set 210 by disposing a plurality of groups each including one oil spray pipe 112 and one oil transport tank 124, and implement active lubrication and passive lubrication on each to-be-lubricated part, to ensure that the gear set 210 can be reliably lubricated in both the high-speed working condition and the low-speed working condition, thereby improving transmission efficiency and reliability of the gear set 210 and prolonging a service life of the gear set 210.

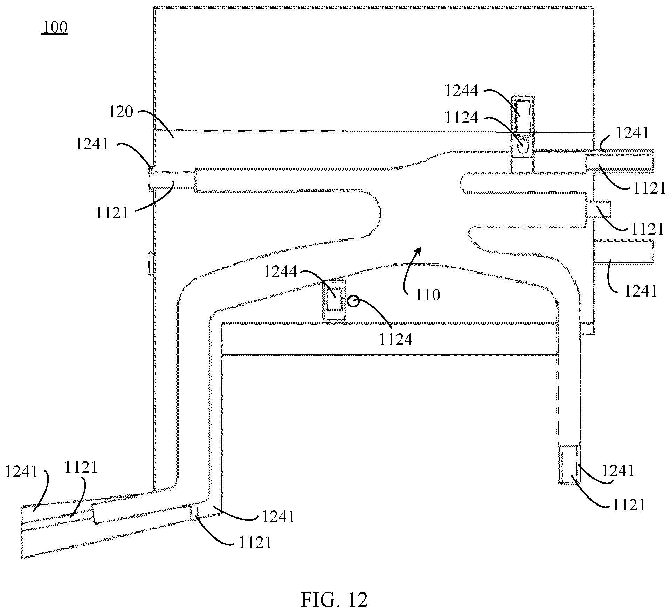

Referring to a schematic diagram of FIG. 12, in an embodiment, the oil spray pipe 112 includes a lateral oil spray pipe 1121. The lateral oil spray pipe 1121 horizontally extends away from the sealing chamber 110. The oil transport tank 124 includes a lateral oil transport tank 1241, and the lateral oil transport tank 1241 also horizontally extends away from the oil collection tank 120. One lateral oil transport tank 1241 extends in parallel to one lateral oil spray pipe 1121. Because the oil collection tank 120 is located above the sealing chamber 110, the lateral oil transport tank 1241 is also synchronously located above the lateral oil spray pipe 1121, and the lateral oil transport tank 1241 and the lateral oil spray pipe 1121 extend in parallel toward one to-be-lubricated part of the gear set 210.

In this embodiment, a volume of the oil supply device 100 is relatively small, and a volume of the gear set 210 is relatively large. Therefore, when the oil supply device 100 with the relatively small volume is disposed on the side that is of the gear set 210 and that is away from the oil sump 243, some to-be-lubricated parts of the gear set 210 may be located at lateral direction positions of the oil collection tank 120 and the sealing chamber 110. The horizontally extending lateral oil spray pipe 1121 and lateral oil transport tank 1241 are disposed, to implement a lubrication function of the oil supply device 100 on the to-be-lubricated parts located at the lateral direction positions.

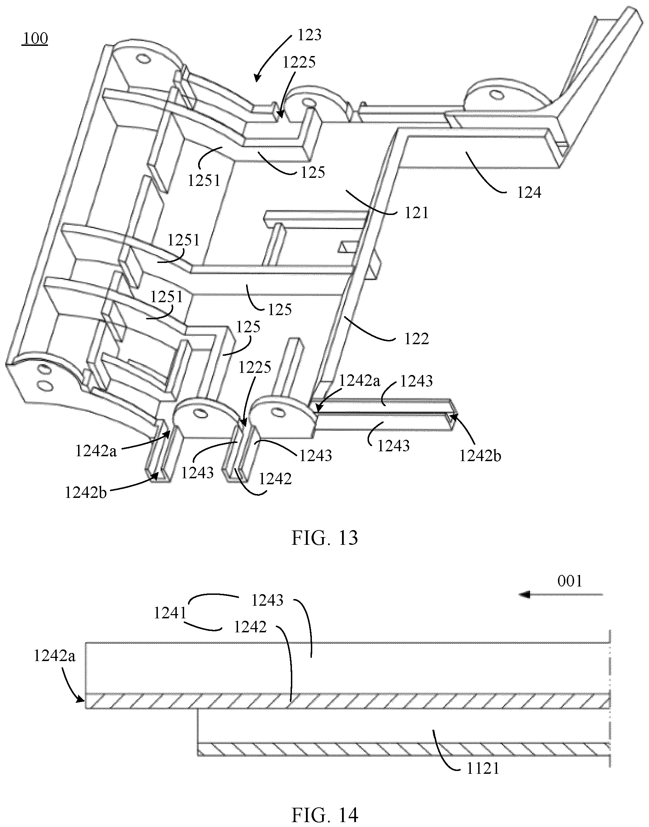

The lateral oil transport tank 1241 is connected to the side plate 122 of the oil collection tank 120. Referring to a schematic diagram of FIG. 13, a gap 1225 is disposed on the side plate 122, and the lateral oil transport tank 1241 includes a tank bottom 1242 and a tank wall 1243. The tank bottom 1242 of the lateral oil transport tank 1241 is connected to the bottom plate 121 of the oil collection tank 120, and horizontally extends toward one part that is of the gear set 210 and to which oil is to be supplied. The lateral oil transport tank 1241 includes two tank walls 1243. The two tank walls 1243 are separately arranged on both sides of the tank bottom 1242, and the two tank walls 1243 are located above the tank bottom 1242. The two tank walls 1243 are separately connected to the side plate 122 on opposite sides of the gap 1225, and the two tank walls 1243 further extend, in synchronization with the tank bottom 1242, toward the part to which oil is to be supplied. The two tank walls 1243 and the tank bottom 1242 jointly direct, to the part to which oil is to be supplied, the lubricating oil flowing out of the oil collection tank 120 from the gap 1225, and the lubricating oil flows downward from an end that is of the oil transport tank 124 and that is away from the oil collection tank 120, to lubricate the part to which oil is to be supplied. Further, the tank bottom 1242 includes a first end 1242a close to a side of the gap 1225 and a second end 1242b away from a side of the oil collection tank 120. The second end 1242b is vertically located below the first end 1242a or flush with the first end 1242a. Therefore, in a process in which the oil transport tank 124 extends toward the to-be-lubricated part, the tank bottom 1242 of the oil transport tank 124 extends toward the to-be-lubricated part in a direction of tilting downward or horizontally, to ensure a flowing direction of the lubricating oil in the oil transport tank 124, so that the lubricating oil in the oil transport tank 124 can smoothly flow from a side of the first end 1242a to a side of the second end 1242b under an action of gravity.

It may be understood that the lateral oil spray pipe 1121 located below the lateral oil transport tank 1241 may also be tilted in synchronization with the lateral oil transport tank 1241, in other words, an end that is of the lateral oil spray pipe 1121 and that is away from the sealing chamber 110 is vertically located below or flush with an end that is of the lateral oil spray pipe 1121 and that is close to the sealing chamber 110. In this way, it can also be ensured that the lubricating oil in the lateral oil spray pipe 1121 flows to the to-be-lubricated part.

In an embodiment, when the oil collection tank 120 is connected to a plurality of lateral oil transport tanks 1241, a plurality of gaps 1225 need to be disposed on the side plate 122. A quantity of the plurality of lateral oil transport tanks 1241 is the same as a quantity of the plurality of gaps 1225, and each lateral oil transport tank 1241 is fastened to one corresponding gap 1225, and is connected to the oil collection tank 120 by using the gap 1225. In an embodiment, tank bottoms 1242 of the plurality of lateral oil transport tanks 1241 each have a corresponding first end 1242a. In this case, a plurality of first ends 1242a are preferentially set to be horizontally flush with each other, so that the lubricating oil in the oil collection tank 120 can be evenly distributed to the lateral oil transport tanks 1241, and the lubricating oil is evenly supplied to the plurality of to-be-lubricated parts of the gear set 210.

Referring to a diagram of a cross-sectional structure of one group including one lateral oil spray pipe 1121 and one lateral oil transport tank 1241 that are parallel to each other and that are shown in FIG. 14, in an embodiment of FIG. 14, both the lateral oil spray pipe 1121 and the lateral oil transport tank 1241 extend in a first horizontal direction 001. In the first horizontal direction 001, an extension length of the lateral oil spray pipe 1121 is less than an extension length of the lateral oil transport tank 1241. In this embodiment, because the lateral oil spray pipe 1121 is connected to the sealing chamber 110, and the lubricating oil in the sealing chamber 110 has specific pressure under an action of the oil transport component 230, the lubricating oil flowing out from the lateral oil spray pipe 1121 has a specific initial speed under an action of the pressure. A direction of the initial speed is parallel to the first horizontal direction 001. However, because the upper opening 123 is disposed in the oil collection tank 120, the lubricating oil in the oil collection tank 120 flows to the to-be-lubricated part through the lateral oil transport tank 1241 only under an action of gravity. Therefore, the lubricating oil flowing out from the lateral oil transport tank 1241 has a relatively small initial speed in the first horizontal direction 001. To ensure that lubricating oil that has a relatively large initial speed and that is output from the lateral oil spray pipe 1121 can act on the to-be-lubricated part and lubricating oil that has a relatively small initial speed and that is output from the lateral oil transport tank 1241 can also act on the to-be-lubricated part, an extension length of the lateral oil spray pipe 1121 in the first horizontal direction 001 is appropriately shortened, so that it can be ensured that a drop point of the lubricating oil output from the lateral oil spray pipe 1121 and a drop point of the lubricating oil output from the lateral oil transport tank 1241 coincide with each other, and both can accurately act on the to-be-lubricated part.

It should be noted that in the schematic diagram of FIG. 14, both the lateral oil spray pipe 1121 and the lateral oil transport tank 1241 extend in the first horizontal direction 001. In other embodiments, an extension direction of the lateral oil spray pipe 1121 and the lateral oil transport tank 1241 may be an extension direction other than the first horizontal direction 001. Alternatively, paths of the lateral oil spray pipe 1121 and the lateral oil transport tank 1241 successively extend in two or more different directions. In this case, a length between an extension structure of the lateral oil spray pipe 1121 at an end farthest from the sealing chamber 110 may be defined to be less than a length of an extension structure of the lateral oil transport tank 1241 at an end farthest from the oil collection tank 120, to achieve the effect of ensuring that the drop point of the lubricating oil output from the lateral oil spray pipe 1121 and the drop point of the lubricating oil output from the lateral oil transport tank 1241 coincide with each other.

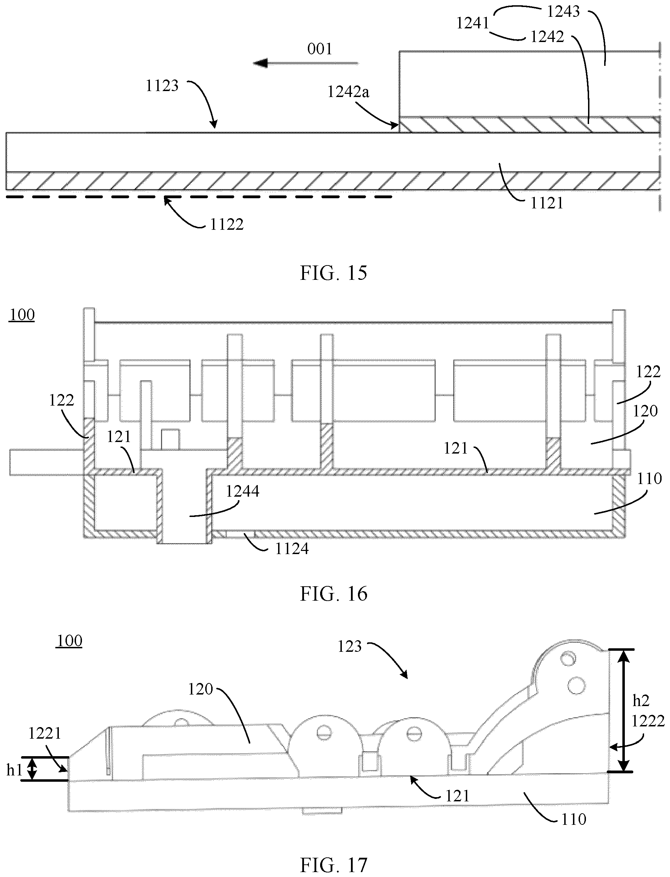

For another embodiment, refer to FIG. 15. In this embodiment, both the lateral oil spray pipe 1121 and the lateral oil transport tank 1241 also extend in the first horizontal direction 001. However, different from the embodiment of FIG. 14, in this embodiment, an extension length of the lateral oil spray pipe 1121 exceeds an extension length of the lateral oil transport tank 1241. Specifically, in a schematic diagram of FIG. 15, the lateral oil spray pipe 1121 has an extension section 1122 beyond the extension length of the lateral oil transport tank 1241, and an open opening 1123 is disposed on the top of the extension section 1122. The lubricating oil transported by the lateral oil transport tank 1241 may flow to the extension section 1122 through the open opening 1123, and continue to flow to the to-be-lubricated part along the extension section 1122.

In this embodiment, a lateral oil spray pipe 1121 and a lateral oil transport tank 1241 in a same group have a same extension direction, and the lateral oil spray pipe 1121 is located above the lateral oil transport tank 1241. Therefore, the open opening 1123 is disposed above the lateral oil spray pipe 1121, so that the lubricating oil in the lateral oil transport tank 1241 flows to the extension section 1122 through the opening 1123, and then the lubricating oil in the lateral oil transport tank 1241 is transported to the to-be-lubricated part through extension of the extension section 1122 toward the to-be-lubricated part. In other words, in this embodiment, the extension section 1122 in the lateral oil spray pipe 1121 is disposed, so that the lubricating oil in the lateral oil transport tank 1241 converges into the lateral oil spray pipe 1121 in advance, and then the lubricating oil is transported through the extension section 1122 in the lateral oil spray pipe 1121.

It may be understood that in this embodiment, the extension section 1122 of the lateral oil spray pipe 1121 is configured to simultaneously implement lubricating oil transport functions during active lubrication and passive lubrication. In this embodiment, a length of the lateral oil transport tank 1241 is also shortened, a structure of the oil supply device 100 is simplified, and the overall volume of the oil supply device 100 is reduced.

In an embodiment, referring to FIG. 16, the oil spray pipe 112 further includes a vertical oil spray pipe 1124 (further synchronously refer to FIG. 11 and FIG. 12). The vertical oil spray pipe 1124 vertically extends away from the sealing chamber 110. The oil transport tank 124 includes a vertical oil transport tank 1244, and the vertical oil transport tank 1244 also vertically extends away from the oil collection tank 120. One vertical oil transport tank 1244 extends in parallel to one vertical oil spray pipe 1124. Because the oil collection tank 120 is located above the sealing chamber 110, the vertical oil transport tank 1244 is located on a side of the vertical oil spray pipe 1124, and the vertical oil transport tank 1244 and the vertical oil spray pipe 1124 extend in parallel toward one to-be-lubricated part of the gear set 210.

In this embodiment, the oil supply device 100 may transport, through the vertical oil spray pipe 1124 and the vertical oil transport tank 1244, the lubricating oil to a to-be-lubricated part located below the oil supply device 100. When the oil supply device 100 is disposed on the side that is of the gear set 210 and that is away from the oil sump 243, some to-be-lubricated parts of the gear set 210 may be located below the oil collection tank 120 and the sealing chamber 110. The vertically extending vertical oil spray pipe 1124 and vertical oil transport tank 1244 are disposed, to implement lubrication of the oil supply device 100 for the to-be-lubricated parts located at lower positions.

In an embodiment, as shown in FIG. 16, the vertical oil spray pipe 1124 is constructed as an opening disposed at the bottom of the sealing chamber 110, and the vertical oil transport tank 1244 is constructed as a through-tank penetrating through the sealing chamber. In addition, the vertical oil transport tank 1244 is further connected to the bottom plate 121 of the oil collection tank 120. In other words, the bottom plate 121 of the oil collection tank 120 is connected to the vertical oil transport tank 1244 with a through-tank structure, and the through-tank structure of the vertical oil transport tank 1244 penetrates through the sealing chamber 110, so that the lubricating oil in the oil collection tank 120 can flow downward through the vertical oil transport tank 1244 with the through-tank structure, and flow to a corresponding to-be-lubricated part through the sealing chamber 110.

It should be noted that for the oil supply device 100 in this application, as shown in FIG. 10 to FIG. 13, the oil collection tank 120 and the sealing chamber 110 may be constructed as two independent components, and are connected and fastened to each other to form the oil supply device 100. In other embodiments, as shown in FIG. 16, the oil collection tank 120 and the sealing chamber 110 may be alternatively disposed as an integral structure. In this case, the bottom plate 121 of the oil collection tank 120 may be configured to form a top structure of the sealing chamber 110, and the side plate 122 of the oil collection tank 120 may also extend toward a part below the bottom plate 121 to form a side structure of the sealing chamber 110. The oil collection tank 120 and the sealing chamber 110 are integrally disposed to reduce the overall volume of the oil supply device 100, to adapt to miniaturization of the transmission 200.

In an embodiment, when the gear set 210 may include some parts that need to be passively or actively lubricated, correspondingly, an auxiliary oil transport tank (not shown in the figure) or an auxiliary oil spray pipe (not shown in the figure) independent of the oil transport tank 124 or the oil spray pipe 112 may be further disposed in the oil supply device 100, to supply lubricating oil to the foregoing parts. For example, for a part to which only an oil amount of active lubrication needs to be provided to meet working requirements in both the high-speed working condition and the low-speed working condition of the transmission 200, an auxiliary oil spray pipe connected to the sealing chamber 110 may be disposed in the oil supply device 100, and the auxiliary oil spray pipe extends toward the part that needs to be only actively lubricated, to actively lubricate the part. Alternatively, for a part that does not need to be lubricated when the transmission 200 is in the low-speed working condition and that needs to be passively lubricated to meet a working requirement when the transmission 200 is in the high-speed working condition, an auxiliary oil transport tank connected to the oil collection tank 120 may be disposed in the oil supply device 100, and the auxiliary oil transport tank extends toward the part that needs to be only passively lubricated, to passively lubricate the part. The auxiliary oil transport tank and the auxiliary oil spray pipe are respectively disposed independently of the oil transport tank 124 and the oil spray pipe 112, so that an applicable scope of the oil supply device 100 in this application is further expanded.

In an embodiment, referring to FIG. 17, the side plate 122 includes a first side plate 1221 close to the first gear 211 and a second side plate 1222 opposite to the first side plate 1221. The first side plate 1221 has a first height h1 relative to the bottom plate 121, the second side plate 1222 has a second height h2 relative to the bottom plate 121, and the second height h2 is greater than the first height h1. It may be understood that because the first side plate 1221 is closer to the first gear 211 than the second side plate 1222, when the gear set 210 rotates, the first gear 211 stirs the lubricating oil, and transports the lubricating oil to the oil collection tank 120 through the oil stirring channel 250 from a side that is of the upper opening 123 and that is close to the first side plate 1221. The height of the first side plate 1221 is set to be relatively small, so that it can be ensured that the lubricating oil smoothly passes over the first side plate 1221 and enters the oil collection tank 120. The height of the second side plate 1222 is set to be relatively large, so that more lubricating oil can be intercepted at a position away from the first gear 211, so that the lubricating oil falls into the oil collection tank 120, thereby ensuring that an amount of lubricating oil in the oil collection tank 120 meets a working requirement of the gear set 210.

It should be noted that the bottom plate 121 on a same horizontal plane is used as a reference for both the height of the first side plate 1221 relative to the bottom plate 121 and the height of the second side plate 1222 relative to the bottom plate 121. In other words, the height of the first side plate 1221 and the height of the second side plate 1222 may be understood as absolute heights in a vertical direction, and a reference start point of the absolute height is the horizontal plane on which the bottom plate 121 is located. Therefore, in some embodiments, when the bottom plate 121 may be tilted or disposed as a step-like structure, it can also be ensured that the height of the second side plate 1222 is greater than the height of the first side plate 1221, so that a better lubricating oil collection effect is achieved.

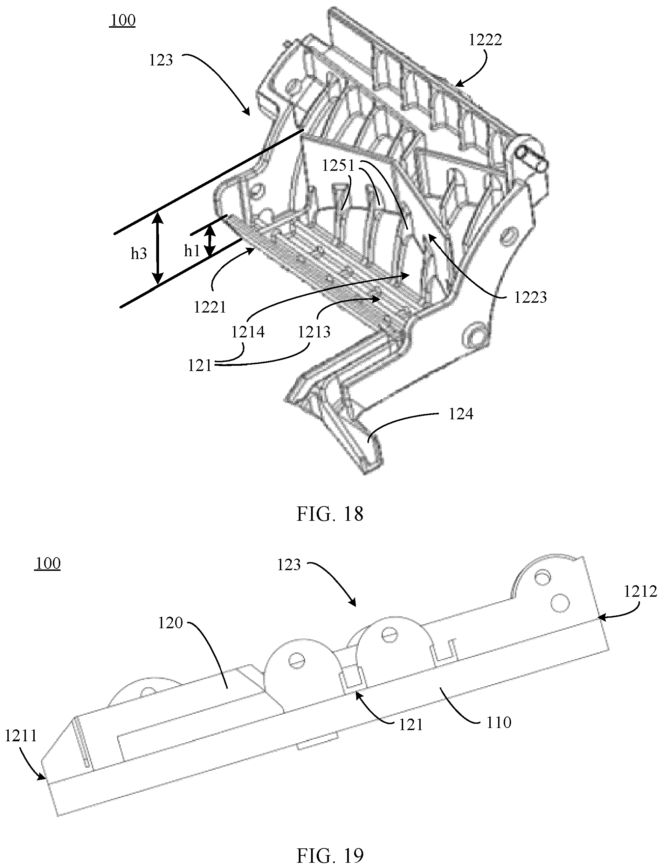

In an embodiment, referring to FIG. 18, the side plate 122 also includes a first side plate 1221 close to the first gear 211 and a second side plate 1222 opposite to the first side plate 1221. In addition, the side plate 122 further includes a third side plate 1223 located between the first side plate 1221 and the second side plate 1222. The third side plate 1223 protrudes on the bottom plate 121, the third side plate 1223 has a third height h3 relative to the bottom plate 121, and the third height h3 is also greater than the first height h1. In this embodiment, the third side plate 1223 is disposed to intercept the lubricating oil transported by the first gear 211, to also ensure that an amount of lubricating oil in the oil collection tank 120 meets a working requirement of the gear set 210. It may be understood that in this embodiment, the same horizontal plane used as a reference for the height of the first side plate 1221 relative to the bottom plate 121 is also used as a reference for the height of the third side plate 1223 relative to the bottom plate 121. In other words, the third height h3 of the third side plate 1223 and the first height h1 of the first side plate 1221 may also be understood as absolute heights in a vertical direction.

In an embodiment, referring to FIG. 19, the bottom plate 121 includes a first side 1211 and a second side 1212 that are opposite to each other. The first side 1211 is located near the first gear 211, and the second side 1212 is located farther from the first gear 211. In addition, the second side 1212 is vertically flush with the first side 1211 or higher than the first side 1211. In other words, the oil collection tank 120 is relatively tilted and fastened in the box body, and a side that is of the tilted oil collection tank 120 and that is close to the first gear 211 is lower. Similar to the foregoing embodiments of FIG. 17 and FIG. 18, in this embodiment of this application, when the gear set 210 rotates, the lubricating oil stirred by the first gear 211 is transported to the oil collection tank 120 from a side that is of the upper opening 123 and that is close to the first side 1211. When the second side 1212 is vertically located above the first side 1211 or flush with the first side 1211, more lubricating oil stirred by the first gear 211 falls into the oil collection tank 120, so that an amount of lubricating oil in the oil collection tank 120 meets a working requirement of the gear set 210, thereby achieving a better lubrication effect.

It may be understood that, as shown in FIG. 19, the bottom plate 121 may be constructed as a planar plate structure. In this case, the bottom plate 121 needs to be tilted, so that the first side 1211 is lower than the second side 1212, to collect more lubricating oil. Alternatively, as shown in FIG. 18, the bottom plate 121 may include a first plate body 1213 and a second plate body 1214 that are fastened to each other. The first side 1211 is formed on a side that is of the first plate body 1213 and that is away from the second plate body 1214, and the second side 1212 is formed on a side that is of the second plate body 1214 and that is away from the first plate body 1213. The first plate body 1213 is horizontally fastened in the box body, so that the lubricating oil in the oil collection tank 120 can flow relatively evenly to the lateral oil transport tanks 1241. The second plate body 1214 is tilted relative to the first plate body 1213, to raise the second side 1212 and collect more lubricating oil.

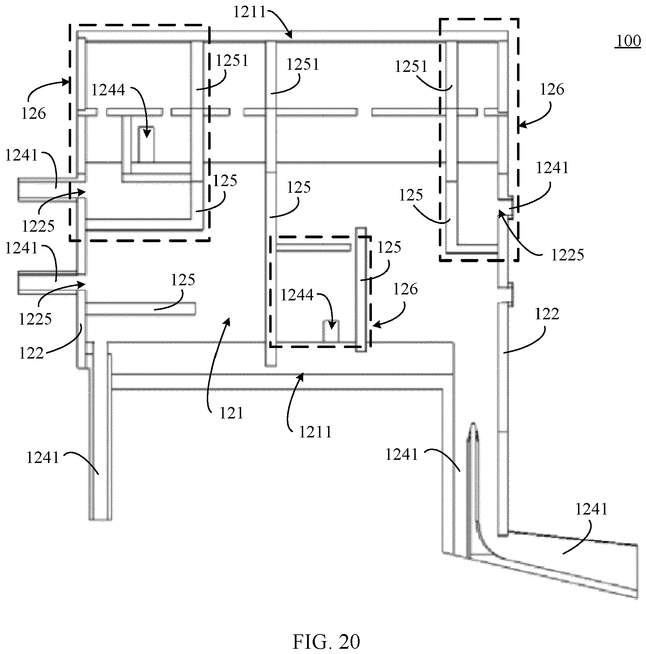

In an embodiment, referring to FIG. 20, a plurality of oil guide plates 125 are further disposed on the bottom plate 121 (further synchronously refer to FIG. 14 and FIG. 10). The plurality of oil guide plates 125 are spaced from each other on the bottom plate 121. The plurality of oil guide plates 125 divide internal space of the oil collection tank 120 into a plurality of oil collection regions 126. Some of the oil collection regions 126 are further connected to different parts of the side plate 122, and at a position that is of the side plate 122 and that is connected to each oil collection region 126, the side plate 122 has one gap 1225 corresponding to each oil collection region. The other oil collection regions 126 are connected to different vertical oil transport tanks 1244 on the bottom plate 121. For ease of description, FIG. 20 shows only some oil collection regions 126. Actually, there are more oil collection regions 126 in FIG. 20, and each oil transport tank 124 is connected to one oil connection region 126.

As mentioned above, each gap 1225 of the side plate 122 is connected to one lateral oil transport tank 1241. Therefore, each of the some oil collection regions 126 connected to the side plate 122 is actually also connected to one lateral oil transport tank 1241, and the other oil collection regions 126 are connected to the vertical oil transport tanks 1244. Therefore, each oil collection region 126 obtained through division of the oil guide plates 125 is connected to one oil transport tank 124, in other words, each oil transport tank 124 is configured to transport lubricating oil in one oil collection region 126 to a corresponding part to which oil is to be supplied.

It may be understood that a distance between the oil guide plates 125 is adjusted to adjust a size of an area of each oil collection region 126. On the premise that liquid levels of lubricating oil in the oil collection tank 120 are consistent, a larger amount of lubricating oil is carried in an oil collection region 126 with a larger area, and traffic of lubricating oil transported by an oil transport tank 124 connected to the oil collection region 126 also increases accordingly. In a working process of the gear set 210, amounts of lubricating oil required by the to-be-lubricated parts may be different. More lubricating oil may be required to lubricate some to-be-lubricated parts with larger gear engagement areas. Therefore, the oil guide plates 125 are used to divide the internal space of the oil collection tank 120 to obtain oil collection regions 126 with different sizes, so that lubricating oil may be allocated based on a requirement of each to-be-lubricated part, thereby further improving a lubrication effect of the oil supply device 100 on the gear set 210.

In a possible embodiment, straight sections 1251 are disposed on all of the plurality of oil guide plates 125, the straight sections 1251 of the plurality of oil guide plates 125 extend to positions of the bottom plate 121 that are close to the second side 1212, and the plurality of straight sections 1251 are parallel to each other and fastened at intervals. The straight sections 1251 of the plurality of oil guide plates 125 are parallel to each other and fastened at intervals at the second side 1212, so that a plurality of channels for guiding lubricating oil to flow can be formed at the second side 1212 of the bottom plate 121. It may be understood that each channel is connected to one oil collection region 126, in other words, the plurality of straight sections 1251 that are parallel to each other and that are fastened at intervals guide the lubricating oil at the second side 1212, so that lubricating oil that enters the oil collection tank 120 from the side can be guided to each oil collection region 126.

As mentioned above, the lubricating oil transported by the first gear 211 to the oil collection tank 120 through the oil stirring channel 250 needs to pass over the side plate 122 at the first side 1211, and then falls into the oil collection tank 120. Therefore, most lubricating oil collected by the oil collection tank 120 enters the oil collection tank 120 from a position close to the second side 1212. The straight sections 1251 are disposed on the oil guide plates 125, and the straight sections 1251 extend to positions close to the second side 1212, so that when most lubricating oil enters the oil collection tank 120, the lubricating oil is split, and lubricating oil obtained after splitting is guided to each oil collection region 126. It may be understood that a distance between the straight sections 1251 at the second side 1212 is adjusted to correspondingly adjust an area of lubricating oil that is obtained after splitting and that is transported to each channel, so that lubricating oil that enters the oil collection tank 120 from the second side 1212 is allocated, and different requirements of the to-be-lubricated parts of the gear set 210 for an amount of lubricating oil can also be met.

It should be noted that in some embodiments, the straight sections 1251 may alternatively extend toward the second side plate 1222 or the third side plate 1223, and oil splitting channels on a side that is of the second side plate 1222 and that is close to the first gear 211 or a side that is of the third side plate 1223 and that is close to the first gear 211 are also formed (refer to FIG. 18), to implement lubricating oil allocation while intercepting lubricating oil at the second side plate 1222 or the third side plate 1223. In such embodiments, the oil guide plate 125 can better guide flow of the lubricating oil in the oil collection tank 120, and it is ensured that lubricating oil collected in each oil collection region 126 meets a working requirement of a to-be-lubricated part corresponding to the oil collection region 126.

The foregoing descriptions are merely specific embodiments of this application, but are not intended to limit the protection scope of this application. Any change or replacement readily figured out by a person skilled in the art within the technical scope disclosed in this application, for example, reduction or addition of a mechanical part or change of a shape of a structural component, shall fall within the protection scope of this application. Without conflicting, embodiments of this application and features in the embodiments may be mutually combined. Therefore, the protection scope of this application shall be subject to the protection scope of the claims.

## Claims

1. A transmission (200), comprising a box body with an inner cavity and a gear set (210) and an oil supply device (100) that are accommodated in the box body, wherein
an oil sump (243) carrying lubricating oil is disposed at the bottom of the inner cavity;
the oil supply device (100) is fastened on a side that is of the gear set (210) and that is away from the oil sump (243), the oil supply device (100) comprises a sealing chamber (110) and an oil collection tank (120) that are fastened to each other, and the oil collection tank (120) is located above the sealing chamber (110);
an oil inlet port (111) and at least one oil spray pipe (112) are disposed for the sealing chamber (110), and the at least one oil spray pipe (112) extends in different directions; and the sealing chamber (110) is configured to: receive the lubricating oil that is in the oil sump (243) and that is transported from the oil inlet port (111), and spray the lubricating oil to at least one to-be-lubricated part of the gear set (210) through the at least one oil spray pipe (112); and
the oil collection tank (120) has an upper opening, the oil collection tank (120) is configured to: when the gear set (210) rotates, receive, by using the upper opening, the lubricating oil that is in the oil sump (243) and that is stirred and transported by the gear set (210) , at least one oil transport tank (124) is further disposed for the oil collection tank (120), a quantity of oil transport tanks is the same as a quantity of oil spray pipes (112), and any oil transport tank (124) is disposed corresponding to one oil spray pipe (112), and is configured to lubricate a same to-be-lubricated part together with the corresponding oil spray pipe (112),
wherein the transmission (200) further comprises an oil transport component (230), the oil transport component (230) comprises an oil transport pipeline (231) and an oil transport pump (232), one end of the oil transport pipeline (231) is connected to the oil inlet port of the oil supply device (100), the other end of the oil transport pipeline (231) is connected to the oil sump (243), and the oil transport pump (232) is configured to pump the lubricating oil in the oil sump (243) into the sealing chamber (110) through the oil transport pipeline (231).

2. The transmission according to claim 1, wherein the gear set comprises a first gear (211) and a second gear (212) that are engaged with each other, and the first gear (211) and the second gear (212) are separately rotatably connected to the box body; and
the bottom of the first gear (211) is located in the oil sump (243) and immersed in the lubricating oil, a side that is of the first gear and that is away from the second gear rotates from bottom to top, the first gear is spaced from an inner wall of the box body to form an oil stirring channel (250), and when the first gear (211) rotates, the lubricating oil in the oil sump (243) can be driven to enter the oil collection tank (120) through the oil stirring channel (250).

3. The transmission (200) according to claim 2, wherein the oil supply device (100) is disposed on a side that is of the first gear (211) and that is close to the second gear (212), the inner wall of the box body comprises a first side wall (241) and a top wall (242), the first side wall (241) is located on the side that is of the first gear (211) and that is away from the second gear (212), the top wall (242) is located above the first side wall (241), and the first side wall (241) and the top wall (242) form the oil stirring channel (250) together with the first gear. (211)

4. The transmission (200) according to claim 2 or 3, wherein a distance between a liquid level of the lubricating oil in the oil sump (243) and a rotation center of the first gear (211) is less than or equal to a radius of a dedendum circle of the first gear (211).

5. The transmission (200) according to any one of claims 1 to 4, wherein the first gear (211) and the second gear (212) are engaged with each other at a first engagement part, and the at least one to-be-lubricated part comprises the first engagement part.

6. The transmission (200) according to any one of claims 1 to 5, wherein the gear set (210) further comprises a first gear shaft (213), a second gear shaft (214), a first bearing (215), and a second bearing (216), the first gear shaft (215) is fastened to the first gear (211), the second gear shaft (216) is fastened to the second gear (212), the first bearing (215) is configured to implement a rotatable connection between the first gear shaft (213) and the box body, the second bearing (216) is configured to implement a rotatable connection between the second gear shaft (214) and the box body, and the to-be-lubricated part further comprises a position of the first bearing (215) and a position of the second bearing (216).

7. The transmission (200) according to any one of claims 1 to 6, wherein a side plate (122) comprises a first side plate (1221) close to the first gear (211) and a second side plate (1222) opposite to the first side plate (1221), the first side plate (1221) has a first height relative to a bottom plate (121), the second side plate (1222) has a second height relative to the bottom plate (121), and the first height is less than the second height.

8. The transmission (200) according to any one of claims 1 to 7, wherein the at least one oil spray pipe (112) comprises a lateral oil spray pipe (1121), and the lateral oil spray pipe (1121) horizontally extends away from the sealing chamber (110); and
the at least one oil transport tank (124) comprises a lateral oil transport tank (1241), a gap connected to the lateral oil transport tank (1241) is disposed on the side plate (122), and the lateral oil transport tank (1241) extends in a same direction as a corresponding lateral oil spray pipe (1121), and is located above the corresponding lateral oil spray pipe (1121).

9. The transmission (200) according to any one of claims 1 to 8, wherein the at least one oil spray pipe comprises a vertical oil spray pipe (1124), and the vertical oil spray pipe (1124) vertically extends away from the sealing chamber (110); and
the at least one oil transport tank (124) comprises a vertical oil transport tank (1244), the vertical oil transport tank (1244) is fastened to the bottom plate (121) of the oil collection tank (120), and is constructed as a through-tank penetrating through the sealing chamber (110), and the vertical oil transport tank (1244) extends in a same direction as a corresponding vertical oil spray pipe (1124), and is located on a side of the corresponding vertical oil spray pipe (1124).

10. The transmission (200) according to any one of claims 1 to 9, wherein a quantity of the at least one oil transport tank (124) is more than one, at least one oil guide plate (125) is further disposed on the bottom plate (121), the at least one oil guide plate (125) divides internal space of the oil collection tank (120) into at least two oil collection regions (126), a quantity of oil collection regions (126) is the same as the quantity of oil transport tanks (124), and each oil transport tank (124) is connected to one oil collection region (126).

11. A vehicle powertrain (500), comprising a motor (300) and the transmission (200) according to any one of claims 1 to 10, wherein the motor is fastened to the transmission (200), and the motor is configured to drive the gear set (210) in the transmission (200) to rotate.

12. The vehicle powertrain (500) according to claim 11, wherein a cooling system (600) is further disposed in the vehicle powertrain, and the cooling system (600) is configured to transport the lubricating oil in the oil sump (243) to the motor (300) to cool the motor (300).

13. The vehicle powertrain (500) according to claim 12, wherein the cooling system (600) comprises an oil inlet pipe (610), an oil return pipe (621), and a heat exchanger (630), both the oil inlet pipe (610) and the oil return pipe (621) are connected between the oil sump (243) and the motor (300), and after flowing to the motor (300) from the oil inlet pipe (610) to complete cooling, the lubricating oil returns to the oil sump (243) through the oil return pipe (621); and
the heat exchanger (630) is connected in series to the oil inlet pipe (610) or the oil return pipe (621), and is configured to cool the lubricating oil.

14. A vehicle, wherein the vehicle comprises wheels and the vehicle powertrain (500) according to any one of claims 11 to 13, and the vehicle powertrain (500) is configured to drive the wheels to rotate.

## Patentansprüche

1. Getriebe (200), umfassend einen Kastenkörper mit einem inneren Hohlraum und einen Zahnradsatz (210) und eine Ölzufuhrvorrichtung (100), die in dem Kastenkörper untergebracht sind, wobei eine Ölwanne (243), die Schmieröl führt, an dem Boden des inneren Hohlraums angeordnet ist;
die Ölzufuhrvorrichtung (100) an einer Seite des Zahnradsatzes (210), die von der Ölwanne (243) abgewandt ist, befestigt ist, wobei die Ölzufuhrvorrichtung (100) eine Dichtungskammer (110) und einen Ölsammelbehälter (120), die aneinander befestigt sind, umfasst und sich der Ölsammelbehälter (120) über der Dichtungskammer (110) befindet;
ein Öleinlassanschluss (111) und mindestens ein Ölsprührohr (112) für die Dichtungskammer (110) angeordnet sind und sich das mindestens eine Ölsprührohr (112) in verschiedene Richtungen erstreckt; und die Dichtungskammer (110) zu Folgendem konfiguriert ist: Aufnehmen des Schmieröls, das sich in der Ölwanne (243) befindet und das von dem Öleinlassanschluss (111) transportiert wird, und Sprühen des Schmieröls durch das mindestens eine Ölsprührohr (112) auf mindestens ein zu schmierendes Teil des Zahnradsatzes (210); und
der Ölsammelbehälter (120) eine obere Öffnung aufweist, wobei der Ölsammelbehälter (120) zu Folgendem konfiguriert ist: wenn sich der Zahnradsatz (210) dreht, Aufnehmen, unter Verwendung der oberen Öffnung, des Schmieröls, das sich in der Ölwanne (243) befindet und das durch den Zahnradsatz (210) gerührt und transportiert wird, wobei mindestens ein Öltransportbehälter (124) ferner für den Ölsammelbehälter (120) angeordnet ist, wobei eine Anzahl von Öltransportbehältern gleich einer Anzahl von Ölsprührohren (112) ist und ein beliebiger Öltransportbehälter (124) entsprechend einem Ölsprührohr (112) angeordnet ist und dazu konfiguriert ist, zusammen mit dem entsprechenden Ölsprührohr (112) ein gleiches zu schmierendes Teil zu schmieren,
wobei das Getriebe (200) ferner eine Öltransportkomponente (230) umfasst, wobei die Öltransportkomponente (230) eine Öltransportleitung (231) und eine Öltransportpumpe (232) umfasst, ein Ende der Öltransportleitung (231) mit dem Öleinlassanschluss der Ölzufuhrvorrichtung (100) verbunden ist, das andere Ende der Öltransportleitung (231) mit der Ölwanne (243) verbunden ist und die Öltransportpumpe (232) dazu konfiguriert ist, das Schmieröl in der Ölwanne (243) durch die Öltransportleitung (231) in die Dichtungskammer (110) zu pumpen.

2. Getriebe nach Anspruch 1, wobei der Zahnradsatz ein erstes Zahnrad (211) und ein zweites Zahnrad (212) umfasst, die miteinander in Eingriff stehen, und das erste Zahnrad (211) und das zweite Zahnrad (212) separat drehbar mit dem Kastenkörper verbunden sind; und
sich die Unterseite des ersten Zahnrads (211) in der Ölwanne (243) befindet und in das Schmieröl eingetaucht ist, eine Seite des ersten Zahnrads, die von dem zweiten Zahnrad abgewandt ist, sich von unten nach oben dreht, das erste Zahnrad von einer Innenwand des Kastenkörpers beabstandet ist, um einen Ölrührkanal (250) zu bilden, und, wenn sich das erste Zahnrad (211) dreht, das Schmieröl in der Ölwanne (243) dazu angetrieben werden kann, durch den Ölrührkanal (250) in den Ölsammelbehälter (120) einzutreten.

3. Getriebe (200) nach Anspruch 2, wobei die Ölzufuhrvorrichtung (100) auf einer Seite des ersten Zahnrad (211) angeordnet ist, die nahe dem zweiten Zahnrad (212) ist, wobei die Innenwand des Kastenkörpers eine erste Seitenwand (241) und eine obere Wand (242) umfasst, die erste Seitenwand (241) an der Seite des ersten Zahnrads (211) angeordnet ist, die dem zweiten Zahnrad (212) abgewandt ist, sich die obere Wand (242) über der ersten Seitenwand (241) befindet und die erste Seitenwand (241) und die obere Wand (242) zusammen mit dem ersten Zahnrad (211) den Ölrührkanal (250) bilden.

4. Getriebe (200) nach Anspruch 2 oder 3, wobei ein Abstand zwischen einem Flüssigkeitspegel des Schmieröls in der Ölwanne (243) und einem Drehzentrum des ersten Zahnrads (211) kleiner als oder gleich einem Radius eines Fußkreises des ersten Zahnrads (211) ist.

5. Getriebe (200) nach einem der Ansprüche 1 bis 4, wobei das erste Zahnrad (211) und das zweite Zahnrad (212) an einem ersten Eingriffsteil miteinander in Eingriff stehen und das mindestens eine zu schmierende Teil den ersten Eingriffsteil umfasst.

6. Getriebe (200) nach einem der Ansprüche 1 bis 5, wobei der Zahnradsatz (210) ferner eine erste Zahnradwelle (213), eine zweite Zahnradwelle (214), ein erstes Lager (215) und ein zweites Lager (216) umfasst, die erste Zahnradwelle (215) an dem ersten Zahnrad (211) befestigt ist, die zweite Zahnradwelle (216) an dem zweiten Zahnrad (212) befestigt ist, das erste Lager (215) dazu konfiguriert ist, eine drehbare Verbindung zwischen der ersten Zahnradwelle (213) und dem Kastenkörper umzusetzen, das zweite Lager (216) dazu konfiguriert ist, eine drehbare Verbindung zwischen der zweiten Zahnradwelle (214) und dem Kastenkörper umzusetzen, und das zu schmierende Teil ferner eine Position des ersten Lagers (215) und eine Position des zweiten Lagers (216) umfasst.

7. Getriebe (200) nach einem der Ansprüche 1 bis 6, wobei eine Seitenplatte (122) eine erste Seitenplatte (1221) nahe dem ersten Zahnrad (211) und eine zweite Seitenplatte (1222) gegenüber der ersten Seitenplatte (1221) umfasst, die erste Seitenplatte (1221) eine erste Höhe relativ zu einer Bodenplatte (121) aufweist, die zweite Seitenplatte (1222) eine zweite Höhe relativ zu der Bodenplatte (121) aufweist und die erste Höhe kleiner als die zweite Höhe ist.

8. Getriebe (200) nach einem der Ansprüche 1 bis 7, wobei das mindestens eine Ölsprührohr (112) ein seitliches Ölsprührohr (1121) umfasst und sich das seitliche Ölsprührohr (1121) horizontal von der Dichtungskammer (110) weg erstreckt; und
der mindestens eine Öltransportbehälter (124) einen seitlichen Öltransportbehälter (1241) umfasst, ein Spalt, der mit dem seitlichen Öltransportbehälter (1241) verbunden ist, an der Seitenplatte (122) angeordnet ist und sich der seitliche Öltransportbehälter (1241) in die gleiche Richtung erstreckt wie ein entsprechendes seitliches Ölsprührohr (1121) und sich über dem entsprechenden seitlichen Ölsprührohr (1121) befindet.

9. Getriebe (200) nach einem der Ansprüche 1 bis 8, wobei das mindestens eine Ölsprührohr ein vertikales Ölsprührohr (1124) umfasst und sich das vertikale Ölsprührohr (1124) vertikal von der Dichtungskammer (110) weg erstreckt; und
der mindestens eine Öltransportbehälter (124) einen vertikalen Öltransportbehälter (1244) umfasst, der vertikale Öltransportbehälter (1244) an der Bodenplatte (121) des Ölsammelbehälters (120) befestigt ist und als Durchgangstank konstruiert ist, der die Dichtungskammer (110) durchdringt, und sich der vertikale Öltransportbehälter (1244) in die gleiche Richtung erstreckt wie ein entsprechendes vertikales Ölsprührohr (1124) und sich auf einer Seite des entsprechenden vertikalen Ölsprührohrs (1124) befindet.

10. Getriebe (200) nach einem der Ansprüche 1 bis 9, wobei eine Anzahl des mindestens einen Öltransportbehälters (124) größer als eins ist, mindestens eine Ölleitplatte (125) ferner auf der Bodenplatte (121) angeordnet ist, die mindestens eine Ölleitplatte (125) einen Innenraum des Ölsammelbehälters (120) in mindestens zwei Ölsammelbereiche (126) unterteilt, eine Anzahl von Ölsammelbereichen (126) gleich der Anzahl von Öltransportbehältern (124) ist und jeder Öltransportbehälter (124) mit einem Ölsammelbereich (126) verbunden ist.

11. Fahrzeugantriebsstrang (500), umfassend einen Motor (300) und das Getriebe (200) nach einem der Ansprüche 1 bis 10, wobei der Motor an dem Getriebe (200) befestigt ist und der Motor dazu konfiguriert ist, den Zahnradsatz (210) in dem Getriebe (200) dazu anzutreiben, sich zu drehen.

12. Fahrzeugantriebsstrang (500) nach Anspruch 11, wobei ferner ein Kühlsystem (600) in dem Fahrzeugantriebsstrang angeordnet ist und das Kühlsystem (600) dazu konfiguriert ist, das Schmieröl in der Ölwanne (243) zu dem Motor (300) zu transportieren, um den Motor (300) zu kühlen.

13. Fahrzeugantriebsstrang (500) nach Anspruch 12, wobei das Kühlsystem (600) ein Öleinlassrohr (610), ein Ölrücklaufrohr (621) und einen Wärmetauscher (630) umfasst, wobei sowohl das Öleinlassrohr (610) als auch das Ölrücklaufrohr (621) zwischen der Ölwanne (243) und dem Motor (300) verbunden sind und das Schmieröl, nachdem es von dem Öleinlassrohr (610) zu dem Motor (300) geflossen ist, zum Abschließen der Kühlung durch das Ölrücklaufrohr (621) zu der Ölwanne (243) zurückkehrt; und
der Wärmetauscher (630) in Reihe mit dem Öleinlassrohr (610) oder dem Ölrücklaufrohr (621) verbunden ist und dazu konfiguriert ist, das Schmieröl zu kühlen.

14. Fahrzeug, wobei das Fahrzeug Räder und den Fahrzeugantriebsstrang (500) nach einem der Ansprüche 11 bis 13 umfasst und der Fahrzeugantriebsstrang (500) dazu konfiguriert ist, die Räder dazu anzutreiben, sich zu drehen.

## Revendications

1. Transmission (200), comprenant un corps de boîte avec une cavité intérieure et un ensemble d'engrenages (210) et un dispositif d'alimentation en huile (100) qui sont logés dans le corps de boîte, dans laquelle
un carter d'huile (243) transportant de l'huile de lubrification est disposé au fond de la cavité intérieure ;
le dispositif d'alimentation en huile (100) est fixé sur un côté de l'ensemble d'engrenages (210) et qui est éloigné du carter d'huile (243), le dispositif d'alimentation en huile (100) comprend une chambre d'étanchéité (110) et un réservoir de récupération d'huile (120) qui sont fixés l'un à l'autre, et le réservoir de récupération d'huile (120) est situé au-dessus de la chambre d'étanchéité (110) ;
un orifice d'admission d'huile (111) et au moins un tuyau de pulvérisation d'huile (112) sont disposés pour la chambre d'étanchéité (110), et l'au moins un tuyau de pulvérisation d'huile (112) se prolonge dans des directions différentes ; et la chambre d'étanchéité (110) est configurée pour : recevoir l'huile de lubrification qui se trouve dans le carter d'huile (243) et qui est transportée depuis l'orifice d'admission d'huile (111), et pulvériser l'huile de lubrification sur au moins une partie à lubrifier de l'ensemble d'engrenages (210) à travers l'au moins un tuyau de pulvérisation d'huile (112) ; et
le réservoir de récupération d'huile (120) présente une ouverture supérieure, le réservoir de récupération d'huile (120) est configuré pour : lorsque l'ensemble d'engrenages (210) tourne, recevoir, en utilisant l'ouverture supérieure, l'huile de lubrification qui se trouve dans le carter d'huile (243) et qui est agitée et transportée par l'ensemble d'engrenages (210), au moins un réservoir de transport d'huile (124) est également disposé pour le réservoir de récupération d'huile (120), une quantité de réservoirs de transport d'huile est la même qu'une quantité de tuyaux de pulvérisation d'huile (112), et tout réservoir de transport d'huile (124) est disposé en correspondance avec un tuyau de pulvérisation d'huile (112), et est configuré pour lubrifier une même pièce à lubrifier avec le tuyau de pulvérisation d'huile correspondant (112),
dans laquelle la transmission (200) comprend également un composant de transport d'huile (230), le composant de transport d'huile (230) comprend une canalisation de transport d'huile (231) et une pompe de transport d'huile (232), une extrémité de la canalisation de transport d'huile (231) est reliée à l'orifice d'entrée d'huile du dispositif d'alimentation en huile (100), l'autre extrémité de la canalisation de transport d'huile (231) est reliée au carter d'huile (243), et la pompe de transport d'huile (232) est configurée pour pomper l'huile de lubrification dans le carter d'huile (243) dans la chambre d'étanchéité (110) à travers la canalisation de transport d'huile (231).

2. Transmission selon la revendication 1, dans laquelle l'ensemble d'engrenages comprend un premier engrenage (211) et un deuxième engrenage (212) qui sont en prise l'un avec l'autre, et le premier engrenage (211) et le deuxième engrenage (212) sont reliés de manière rotative séparément au corps de boîte ; et
le bas du premier engrenage (211) est situé dans le carter d'huile (243) et immergé dans l'huile de lubrification, un côté qui est du premier engrenage et qui est éloigné du deuxième engrenage tourne de bas en haut, le premier engrenage est espacé d'une paroi intérieure du corps de boîte pour former un canal d'agitation d'huile (250), et lorsque le premier engrenage (211) tourne, l'huile de lubrification dans le carter d'huile (243) peut être entraînée pour entrer dans le réservoir de récupération d'huile (120) à travers le canal d'agitation d'huile (250).

3. Transmission (200) selon la revendication 2, dans laquelle le dispositif d'alimentation en huile (100) est disposé sur un côté qui est du premier engrenage (211) et qui est proche du deuxième engrenage (212), la paroi intérieure du corps de boîte comprend une première paroi latérale (241) et une paroi supérieure (242), la première paroi latérale (241) est située sur le côté qui est du premier engrenage (211) et qui est éloigné du deuxième engrenage (212), la paroi supérieure (242) est située au-dessus de la première paroi latérale (241), et la première paroi latérale (241) et la paroi supérieure (242) forment le canal d'agitation d'huile (250) avec le premier engrenage(211).

4. Transmission (200) selon la revendication 2 ou 3, dans laquelle une distance entre un niveau de liquide de l'huile de lubrification dans le carter d'huile (243) et un centre de rotation du premier engrenage (211) est inférieure ou égale à un rayon d'un cercle de creux du premier engrenage (211).

5. Transmission (200) selon l'une quelconque des revendications 1 à 4, dans laquelle le premier engrenage (211) et le deuxième engrenage (212) sont en prise l'un avec l'autre au niveau d'une première partie d'engagement, et l'au moins une partie à lubrifier comprend la première partie d'engagement.

6. Transmission (200) selon l'une quelconque des revendications 1 à 5, dans laquelle l'ensemble d'engrenages (210) comprend également un premier arbre d'engrenage (213), un deuxième arbre d'engrenage (214), un premier palier (215) et un deuxième palier (216), le premier arbre d'engrenages (215) est fixé au premier engrenage (211), le deuxième arbre d'engrenages (216) est fixé au deuxième engrenage (212), le premier palier (215) est configuré pour mettre en œuvre une liaison rotative entre le premier arbre d'engrenage (213) et le corps de boîte, le deuxième palier (216) est configuré pour mettre en œuvre une liaison rotative entre le deuxième arbre d'engrenages (214) et le corps de boîte, et la partie à lubrifier comprend également une position du premier palier (215) et une position du deuxième palier (216).

7. Transmission (200) selon l'une quelconque des revendications 1 **à 6,** dans laquelle une plaque latérale (122) comprend une première plaque latérale (1221) proche du premier engrenage (211) et une seconde plaque latérale (1222) opposée à la première plaque latérale (1221), la première plaque latérale (1221) a une première hauteur par rapport à une plaque inférieure (121), la seconde plaque latérale (1222) a une seconde hauteur par rapport à la plaque inférieure (121), et la première hauteur est inférieure à la seconde hauteur.

8. Transmission (200) selon l'une quelconque des revendications 1 **à 7,** dans laquelle l'au moins un tuyau de pulvérisation d'huile (112) comprend un tuyau de pulvérisation d'huile latéral (1121), et le tuyau de pulvérisation d'huile latéral (1121) se prolonge horizontalement à l'écart de la chambre d'étanchéité (110) ; et l'au moins un réservoir de transport d'huile (124) comprend un réservoir de transport d'huile latéral (1241), un espace relié au réservoir de transport d'huile latéral (1241) est disposé sur la plaque latérale (122), et le réservoir de transport d'huile latéral (1241) se prolonge dans la même direction qu'un tuyau de pulvérisation d'huile latéral correspondant (1121), et est situé au-dessus du tuyau de pulvérisation d'huile latéral correspondant (1121).

9. Transmission (200) selon l'une quelconque des revendications 1 à 8, dans laquelle l'au moins un tuyau de pulvérisation d'huile comprend un tuyau de pulvérisation d'huile vertical (1124), et le tuyau de pulvérisation d'huile vertical (1124) se prolonge verticalement à l'écart de la chambre d'étanchéité (110) ; et l'au moins un réservoir de transport d'huile (124) comprend un réservoir de transport d'huile vertical (1244), le réservoir de transport d'huile vertical (1244) est fixé à la plaque inférieure (121) du réservoir de collecte d'huile (120), et est construit comme un réservoir traversant pénétrant à travers la chambre d'étanchéité (110), et le réservoir de transport d'huile vertical (1244) se prolonge dans une même direction qu'un tuyau de pulvérisation d'huile vertical correspondant (1124), et est situé sur un côté du tuyau de pulvérisation d'huile vertical correspondant (1124).

10. Transmission (200) selon l'une quelconque des revendications 1 à 9, dans laquelle une quantité de l'au moins un réservoir de transport d'huile (124) est supérieure à un, au moins une plaque de guidage d'huile (125) est également disposée sur la plaque inférieure (121), la ou les plaques de guidage d'huile (125) divisent l'espace interne du réservoir de récupération d'huile (120) en au moins deux régions de collecte d'huile (126), une quantité de régions de collecte d'huile (126) est la même que la quantité de réservoirs de transport d'huile (124), et chaque réservoir de transport d'huile (124) est relié à une région de collecte d'huile (126).

11. Groupe motopropulseur de véhicule (500), comprenant un moteur (300) et la transmission (200) selon l'une quelconque des revendications 1 à 10, dans lequel le moteur est fixé à la transmission (200), et le moteur est configuré pour entraîner l'ensemble d'engrenages (210) dans la transmission (200) en rotation.

12. Groupe motopropulseur de véhicule (500) selon la revendication 11, dans lequel un système de refroidissement (600) est également disposé dans le groupe motopropulseur de véhicule, et le système de refroidissement (600) est configuré pour transporter l'huile de lubrification dans le carter d'huile (243) vers le moteur (300) pour refroidir le moteur (300).

13. Groupe motopropulseur de véhicule (500) selon la revendication 12, dans lequel le système de refroidissement (600) comprend un tuyau d'admission d'huile (610), un tuyau de retour d'huile (621) et un échangeur de chaleur (630), le tuyau d'admission d'huile (610) et le tuyau de retour d'huile (621) sont tous deux connectés entre le carter d'huile (243) et le moteur (300), et après avoir circulé vers le moteur (300) depuis le tuyau d'admission d'huile (610) pour terminer le refroidissement, l'huile de lubrification retourne au carter d'huile (243) par le tuyau de retour d'huile (621) ; et
l'échangeur de chaleur (630) est connecté en série au tuyau d'admission d'huile (610) ou au tuyau de retour d'huile (621), et est configuré pour refroidir l'huile de lubrification.

14. Véhicule, dans lequel le véhicule comprend des roues et le groupe motopropulseur de véhicule (500) selon l'une quelconque des revendications 11 à 13, et le groupe motopropulseur de véhicule (500) est configuré pour entraîner les roues en rotation.
